# EUROPEAN PATENT APPLICATION

(11) **EP 4 465 672 A1**
(43) Date of publication of application: **20.11.2024**
(21) Application number: 23790997.3
(22) Date of filing: 29.03.2023
(51) Int. Cl.: H04W 12/06, H04W 12/69

(54) **COMMUNICATION METHOD AND APPARATUS**

(30) Priority: 21.04.2022 CN 202210426836
(71) Applicant: Huawei Technologies Co., Ltd., Shenzhen, Guangdong 518129 (CN)
(72) Inventor: LI, He, Shenzhen, Guangdong 518129 (CN); WU, Rong, Shenzhen, Guangdong 518129 (CN); LEI, Ao, Shenzhen, Guangdong 518129 (CN); WU, Yizhuang, Shenzhen, Guangdong 518129 (CN)
(74) Representative: Gill Jennings & Every LLP
(86) International application number: PCT/CN2023/084809
(87) International publication number: WO 2023/202337

(57) **Abstract**

A communication method and apparatus are provided. The method may include: A mobility management network element receives a transaction identifier of a remote terminal device and a name of a data network from a relay terminal device. The mobility management network element determines a subscription permanent identifier of the remote terminal device based on the transaction identifier, and then sends the subscription permanent identifier and the name of the data network to a session management network element. After receiving the subscription permanent identifier and the name of the data network, the session management network element determines, by using a data management network element based on the subscription permanent identifier and the name of the data network, whether to perform secondary authentication on the remote terminal device. Whether to perform secondary authentication on the remote terminal device can be determined by using the provided solution.

## Description

This application claims priority to Chinese Patent Application No. 202210426836.2, filed with the China National Intellectual Property Administration on April 21, 2022 and entitled "COMMUNICATION METHOD AND APPARATUS", which is incorporated herein by reference in its entirety.

### TECHNICAL FIELD

This application relates to the field of communication technologies, and in particular, to a communication method and apparatus.

### BACKGROUND

In a 5th generation (5th generation, 5G) communication system, to ensure network security, a primary authentication (primary authentication) procedure needs to be performed on a terminal device that is to access a network. That is, identity authentication and authorization need to be performed on the terminal device. A terminal device can access a 3rd generation partnership project (3rd generation partnership project, 3GPP) network, and further request to establish a protocol data unit (protocol data unit, PDU) session to access various services on a data network (data network, DN), only after authentication on the terminal device succeeds.

With development of vertical industries and internet of things, a DN other than an operator network also has an authentication and authorization requirement, namely, a secondary authentication (secondary authentication) requirement, for some terminal devices that are to access the DN. In such an authentication manner, the data network other than the operator network may perform authentication or authorization on the terminal devices through the operator network. However, secondary authentication does not need to be performed on all terminal devices. How to determine whether secondary authentication needs to be performed on a remote terminal device in 5G proximity-based services (proximity-based services, ProSe) is a problem that needs to be considered currently.

### SUMMARY

This application provides a communication method and apparatus, to determine whether to perform secondary authentication on a remote terminal device in proximity-based services.

According to a first aspect, a communication method is provided. The method may be performed by a mobility management network element, or may be performed by a component (for example, a chip or a circuit) of the mobility management network element. This is not limited. For ease of description, the following provides descriptions by using an example in which the method is performed by the mobility management network element.

The communication method includes: The mobility management network element receives a transaction identifier of a remote terminal device and report information of the remote terminal device from a relay terminal device, where the report information includes a name of a data network corresponding to the remote terminal device. The mobility management network element determines a subscription permanent identifier of the remote terminal device based on the transaction identifier. The mobility management network element sends the subscription permanent identifier and the report information to a session management network element.

It should be noted that the mobility management network element is a network element that provides a service for the relay terminal device, and the relay terminal device provides a relay service for the remote terminal device. In other words, the relay terminal device and the remote terminal device are a relay device and a remote device in a proximity-based services scenario.

Based on the foregoing solution, the mobility management network element may provide the subscription permanent identifier of the remote terminal device and the name of the data network for the session management network element, so that the mobility management network element can determine, based on these pieces of information, whether to perform secondary authentication on the remote terminal device.

With reference to the first aspect, in some implementations of the first aspect, the method further includes: The mobility management network element receives the subscription permanent identifier of the remote terminal device from an authentication server function network element. The mobility management network element stores a correspondence between the subscription permanent identifier and the transaction identifier. That the mobility management network element determines the subscription permanent identifier of the remote terminal device based on the transaction identifier includes: The mobility management network element determines the subscription permanent identifier based on the transaction identifier and the correspondence.

Based on the foregoing solution, the mobility management network element may prestore the correspondence between the subscription permanent identifier and the transaction identifier. In this case, after receiving the transaction identifier of the remote terminal device from the relay terminal device, the mobility management network element may determine the subscription permanent identifier of the remote terminal device based on the transaction identifier and the correspondence.

With reference to the first aspect, in some implementations of the first aspect, after the mobility management network element sends the subscription permanent identifier and the report information to the session management network element, the method further includes: The mobility management network element receives an authentication command message from the session management network element, where the authentication command message includes identification information of the remote terminal device, and the authentication command message is for requesting to perform secondary authentication on the remote terminal device. The mobility management network element sends the authentication command message to the relay terminal device.

According to a second aspect, a communication method is provided. The method may be performed by a session management network element, or may be performed by a component (for example, a chip or a circuit) of the session management network element. This is not limited. For ease of description, the following provides descriptions by using an example in which the method is performed by the session management network element.

The communication method includes: The session management network element receives report information of a remote terminal device and a subscription permanent identifier of the remote terminal device from a mobility management network element, where the report information includes a name of a data network corresponding to the remote terminal device. The session management network element sends a request message to a data management network element, where the request message includes the subscription permanent identifier and the name of the data network. The session management network element receives information from the data management network element, where the information is for determining whether to perform secondary authentication on the remote terminal device. The session management network element determines, based on the information, whether to perform secondary authentication on the remote terminal device.

It should be noted that the mobility management network element is a network element that provides a service for a relay terminal device, and the relay terminal device provides a relay service for the remote terminal device. In other words, the relay terminal device and the remote terminal device are a relay device and a remote device in a proximity-based services scenario.

Based on the foregoing solution, the session management network element may obtain the subscription permanent identifier of the remote terminal device and the name of the data network from the mobility management network element. Therefore, the session management network element can obtain, from the data management network element based on these pieces of information, the information for determining whether to perform secondary authentication on the remote terminal device, thereby determining whether secondary authentication needs to be performed on the remote terminal device.

With reference to the second aspect, in some implementations of the second aspect, the information includes at least one of the following information: subscription data that is of the remote terminal device and that corresponds to the data network and is related to session management, first indication information, and second indication information, where the first indication information indicates whether secondary authentication needs to be performed on the remote terminal device, and the second indication information indicates whether a previous time of secondary authentication on the remote terminal device succeeds.

According to a third aspect, a communication method is provided. The method may be performed by a relay terminal device, or may be performed by a component (for example, a chip or a circuit) of the relay terminal device. This is not limited. For ease of description, the following provides descriptions by using an example in which the method is performed by the relay terminal device.

The communication method includes: The relay terminal device generates report information of a remote terminal device, where the report information includes a name of a data network corresponding to the remote terminal device. The relay terminal device sends, to a mobility management network element, the report information and a transaction identifier corresponding to the remote terminal device.

It should be noted that the mobility management network element is a network element that provides a service for the relay terminal device, and the relay terminal device provides a relay service for the remote terminal device. In other words, the relay terminal device and the remote terminal device are a relay device and a remote device in a proximity-based services scenario.

Based on the foregoing solution, the relay terminal device may provide the mobility management network element with the transaction identifier corresponding to the remote terminal device and the name of the data network corresponding to the remote terminal device, so that the mobility management network element can provide, based on these pieces of information, a session management network element with related information for obtaining secondary authentication information, where the secondary authentication information herein is information for determining whether to perform secondary authentication on the remote terminal device.

With reference to the third aspect, in some implementations of the third aspect, the method further includes: The relay terminal device determines the name of the data network based on a relay service code corresponding to the remote terminal device.

With reference to the third aspect, in some implementations of the third aspect, after the relay terminal device sends, to the mobility management network element, the transaction identifier corresponding to the remote terminal device, the method further includes: The relay terminal device receives an authentication command message from the mobility management network element, where the authentication command message includes identification information of the remote terminal device, and the authentication command message is for requesting to perform secondary authentication on the remote terminal device. The relay terminal device obtains identity information of the remote terminal device based on the authentication command message. The relay terminal device sends the identity information to the mobility management network element.

According to a fourth aspect, a communication method is provided. The method may be performed by a session management network element, or may be performed by a component (for example, a chip or a circuit) of the session management network element. This is not limited. For ease of description, the following provides descriptions by using an example in which the method is performed by the session management network element.

The communication method includes: The session management network element receives report information of a remote terminal device from a mobility management network element, where the report information includes a subscription concealed identifier of the remote terminal device and a name of a data network corresponding to the remote terminal device. The session management network element sends a request message to a data management network element, where the request message includes the subscription concealed identifier and the name of the data network. The session management network element receives information from the data management network element, where the information is for determining whether to perform secondary authentication on the remote terminal device. The session management network element determines, based on the information, whether to perform secondary authentication on the remote terminal device.

It should be noted that the mobility management network element is a network element that provides a service for a relay terminal device, and the relay terminal device provides a relay service for the remote terminal device. In other words, the relay terminal device and the remote terminal device are a relay device and a remote device in a proximity-based services scenario.

Based on the foregoing solution, the session management network element may obtain the subscription concealed identifier of the remote terminal device and the name of the data network corresponding to the remote terminal device from the mobility management network element, to obtain, from the data management network element based on these pieces of information, the information for determining whether to perform secondary authentication on the remote terminal device, thereby determining whether secondary authentication needs to be performed on the remote terminal device.

With reference to the fourth aspect, in some implementations of the fourth aspect, the information includes at least one of the following information: subscription data that is of the remote terminal device and that corresponds to the data network and is related to session management, first indication information, and second indication information, where the first indication information indicates whether secondary authentication needs to be performed on the remote terminal device, and the second indication information indicates whether a previous time of secondary authentication on the remote terminal device succeeds.

According to a fifth aspect, a communication method is provided. The method may be performed by a relay terminal device, or may be performed by a component (for example, a chip or a circuit) of the relay terminal device. This is not limited. For ease of description, the following provides descriptions by using an example in which the method is performed by the relay terminal device.

The communication method includes: The relay terminal device receives a subscription concealed identifier of a remote terminal device from the remote terminal device. The relay terminal device generates report information of the remote terminal device, where the report information includes the subscription concealed identifier and a name of a data network corresponding to the remote terminal device. The relay terminal device sends the report information of the remote terminal device to a mobility management network element.

It should be noted that the mobility management network element is a network element that provides a service for the relay terminal device, and the relay terminal device provides a relay service for the remote terminal device. In other words, the relay terminal device and the remote terminal device are a relay device and a remote device in a proximity-based services scenario.

Based on the foregoing solution, after obtaining the subscription concealed identifier of the remote terminal device from the remote terminal device, the relay terminal device may provide, by using the report information, the mobility management network element with the subscription concealed identifier and the name of the data network corresponding to the remote terminal device, so that the mobility management network element can send these pieces of information to a session management network element. In this way, the session management network element can obtain, from a data management network element based on these pieces of information, information for determining whether to perform secondary authentication on the remote terminal device, thereby determining whether secondary authentication needs to be performed on the remote terminal device.

With reference to the fifth aspect, in some implementations of the fifth aspect, the method further includes: The relay terminal device determines the name of the data network based on a transaction identifier of the remote terminal device.

With reference to the fifth aspect, in some implementations of the fifth aspect, after the relay terminal device sends the report information of the remote terminal device to the mobility management network element, the method further includes: The relay terminal device receives an authentication command message from the mobility management network element, where the authentication command message includes identification information of the remote terminal device, and the authentication command message is for requesting to perform secondary authentication on the remote terminal device. The relay terminal device obtains identity information of the remote terminal device based on the authentication command message. The relay terminal device sends the identity information to the mobility management network element.

It should be noted that the mobility management network element is the network element that provides the service for the relay terminal device, and the relay terminal device provides the relay service for the remote terminal device. In other words, the relay terminal device and the remote terminal device are the relay device and the remote device in the proximity-based services scenario.

According to a sixth aspect, a communication method is provided. The method may be performed by a remote terminal device, or may be performed by a component (for example, a chip or a circuit) of the remote terminal device. This is not limited. For ease of description, the following provides descriptions by using an example in which the method is performed by the remote terminal device.

The communication method includes: The remote terminal device receives a direct security mode command message from a relay terminal device. The remote terminal device generates a subscription concealed identifier of the remote terminal device. The remote terminal device sends a direct security mode complete message to the relay terminal device, where the direct security mode complete message includes identification information of the remote terminal device.

According to a seventh aspect, a communication method is provided. The method may be performed by a session management network element, or may be performed by a component (for example, a chip or a circuit) of the session management network element. This is not limited. For ease of description, the following provides descriptions by using an example in which the method is performed by the session management network element.

The communication method includes: The session management network element receives identification information of a remote terminal device and first information from a mobility management network element, where the first information is for determining a data network corresponding to the remote terminal device. The session management network element sends a request message to a data management network element, where the request message includes the identification information of the remote terminal device and the first information. The session management receives second information from the data management network element, where the second information is for determining whether to perform secondary authentication on the remote terminal device. The session management network element determines, based on the second information, whether to perform secondary authentication on the remote terminal device.

With reference to the seventh aspect, in some implementations of the seventh aspect, the first information includes at least one of a relay service code, a data network name, and a proximity-based services relay user key identifier that correspond to the remote terminal device.

With reference to the seventh aspect, in some implementations of the seventh aspect, that the session management network element receives the identification information of the remote terminal device and the first information from a relay terminal device includes: The session management network element receives report information from the relay terminal device, where the report information includes the identification information of the remote terminal device and the first information.

With reference to the seventh aspect, in some implementations of the seventh aspect, the second information includes at least one of the following information: session management subscription data that is of the remote terminal device and that corresponds to the data network, first indication information, and second indication information, where the first indication information indicates whether secondary authentication needs to be performed on the remote terminal device, and the second indication information indicates whether a previous time of secondary authentication on the remote terminal device succeeds.

According to an eighth aspect, a communication method is provided. The method may be performed by a data management network element, or may be performed by a component (for example, a chip or a circuit) of the data management network element. This is not limited. For ease of description, the following provides descriptions by using an example in which the method is performed by the data management network element.

The communication method includes: The data management network element receives a request message and first information from a session management network element, where the request message includes identification information of a remote terminal device, and the first information is for determining a data network corresponding to the remote terminal device. The data management network element obtains, based on the identification information and a data network name that are of the remote terminal device, session management subscription data that is of the remote terminal device and that corresponds to the data network name, where the data network name is determined based on the first information. The data management network element sends second information to the session management network element based on the subscription data of the remote terminal device, where the second information is used by the session management network element to determine whether to perform secondary authentication on the remote terminal device.

With reference to the eighth aspect, in some implementations of the eighth aspect, that the data management network element obtains the data network name corresponding to the remote terminal device includes: The data management network element obtains a relay service code of the remote terminal device. The data management network element determines, based on the relay service code of the remote terminal device, the data network name corresponding to the remote terminal device.

With reference to the eighth aspect, in some implementations of the eighth aspect, that the data management network element obtains the relay service code of the remote terminal device includes: The data management network element obtains the relay service code from the request message.

With reference to the eighth aspect, in some implementations of the eighth aspect, that the data management network element obtains the data network name corresponding to the remote terminal device includes: The data management network element obtains the data network name from the request message.

With reference to the eighth aspect, in some implementations of the eighth aspect, the second information includes at least one of the following information: the session management subscription data that is of the remote terminal device and that corresponds to the data network name, first indication information, and second indication information, where the first indication information indicates whether secondary authentication needs to be performed on the remote terminal device, and the second indication information indicates whether a previous time of secondary authentication on the remote terminal device succeeds.

With reference to the eighth aspect, in some implementations of the eighth aspect, the identification information of the remote terminal device is a subscription concealed identifier of the remote terminal device, and that the data management network element obtains the subscription data of the remote terminal device based on the identification information and the data network name that are of the terminal device includes: The data management network element determines a subscription permanent identifier of the remote terminal device based on the subscription concealed identifier. The data management network element obtains, based on the subscription permanent identifier and the data network name, the session management subscription data that is of the remote terminal device and that corresponds to the data network name.

According to a ninth aspect, a communication method is provided. The method may be performed by a relay terminal device, or may be performed by a component (for example, a chip or a circuit) of the relay terminal device. This is not limited. For ease of description, the following provides descriptions by using an example in which the method is performed by the relay terminal device.

The communication method includes: The relay terminal device receives identification information of a remote terminal device from the remote terminal device. The relay terminal device sends, to a session management network element, the identification information of the remote terminal device and first information corresponding to the remote terminal device, where the first information is for determining a data network corresponding to the remote terminal device.

With reference to the ninth aspect, in some implementations of the ninth aspect, the first information includes at least one of a relay service code, a data network name, and a proximity-based services relay user key identifier that correspond to the remote terminal device.

With reference to the ninth aspect, in some implementations of the ninth aspect, the first information includes the data network name of the remote terminal device, and the method further includes: The relay terminal device determines the relay service code corresponding to the remote terminal device. The relay terminal device determines the data network name based on the relay service code.

With reference to the ninth aspect, in some implementations of the ninth aspect, that the relay terminal device sends, to the session management network element, the identification information of the remote terminal device and the first information corresponding to the remote terminal device includes: The relay terminal device sends report information to the session management network element, where the report information includes the identification information of the remote terminal device and the first information.

With reference to the ninth aspect, in some implementations of the ninth aspect, the identification information of the remote terminal device is a subscription concealed identifier of the remote terminal device.

With reference to the ninth aspect, in some implementations of the ninth aspect, that the relay terminal device receives the identification information of the remote terminal device from the remote terminal device includes: The relay terminal device sends a direct security mode command message to the remote terminal device. The relay terminal device receives a direct security mode complete message from the remote terminal device, where the direct security mode complete message includes the identification information of the remote terminal device.

According to a tenth aspect, a communication method is provided. The method may be performed by a mobility management network element, or may be performed by a component (for example, a chip or a circuit) of the mobility management network element. This is not limited. For ease of description, the following provides descriptions by using an example in which the method is performed by the mobility management network element.

The communication method includes: The mobility management network element receives, from a relay terminal device, a transaction identifier specific to a remote terminal device. The mobility management network element determines, based on the transaction identifier, identification information of the remote terminal device corresponding to the transaction identifier. The mobility management network element sends the identification information of the remote terminal device to a session management network element.

With reference to the tenth aspect, in some implementations of the tenth aspect, before the mobility management network element receives, from the relay terminal device, the transaction identifier specific to the remote terminal device, the method further includes: The mobility management network element stores a correspondence between the transaction identifier and the identification information of the remote terminal device.

With reference to the tenth aspect, in some implementations of the tenth aspect, that the mobility management network element determines, based on the transaction identifier, the identification information of the remote terminal device corresponding to the transaction identifier includes: The mobility management network element determines the identification information of the remote terminal device based on the transaction identifier and the correspondence.

With reference to the tenth aspect, in some implementations of the tenth aspect, the method further includes: The mobility management network element determines, based on the transaction identifier, a data network name corresponding to the remote terminal device. The mobility management network element sends the data network name to the session management network element.

With reference to the tenth aspect, in some implementations of the tenth aspect, first information includes at least one of a relay service code, the data network name, and a proximity-based services relay user key identifier that correspond to the remote terminal device.

With reference to the tenth aspect, in some implementations of the tenth aspect, before the mobility management network element receives, from the relay terminal device, the transaction identifier specific to the remote terminal device, the method further includes: The mobility management network element stores a correspondence between the transaction identifier and the identification information of the remote terminal device.

According to an eleventh aspect, a communication method is provided. The method may be performed by a remote terminal device, or may be performed by a component (for example, a chip or a circuit) of the remote terminal device. This is not limited. For ease of description, the following provides descriptions by using an example in which the method is performed by the remote terminal device.

The communication method includes: The remote terminal device receives a direct security mode command message from a relay terminal device. The remote terminal device generates identification information of the remote terminal device. The remote terminal device sends a direct security mode complete message to the relay terminal device, where the direct security mode complete message includes the identification information of the remote terminal device.

With reference to the eleventh aspect, in some implementations of the eleventh aspect, the method further includes: The remote terminal device sends, to the relay terminal device, a data network name corresponding to the remote terminal device.

With reference to the eleventh aspect, in some implementations of the eleventh aspect, the identification information of the remote terminal device is a subscription concealed identifier of the remote terminal device.

According to a twelfth aspect, a communication apparatus is provided. The communication apparatus includes: a transceiver module, configured to receive a transaction identifier of a remote terminal device and report information of the remote terminal device from a relay terminal device, where the report information includes a name of a data network corresponding to the remote terminal device; and a processing module, configured to determine a subscription permanent identifier of the remote terminal device based on the transaction identifier, where the transceiver module is further configured to send the subscription permanent identifier and the report information to a session management network element.

With reference to the twelfth aspect, in some implementations of the twelfth aspect, the transceiver module is further configured to receive, for the mobility management network element, the subscription permanent identifier of the remote terminal device from an authentication server function network element; the processing module is further configured to store a correspondence between the subscription permanent identifier and the transaction identifier; and the processing module is specifically configured to determine the subscription permanent identifier based on the transaction identifier and the correspondence.

With reference to the twelfth aspect, in some implementations of the twelfth aspect, the transceiver module is further configured to: receive an authentication command message from the session management network element, where the authentication command message includes identification information of the remote terminal device, and the authentication command message is for requesting to perform secondary authentication on the remote terminal device; and send the authentication command message to the relay terminal device.

According to a thirteenth aspect, a communication apparatus is provided. The communication apparatus includes: a transceiver module, configured to: receive report information of a remote terminal device and a subscription permanent identifier of the remote terminal device from a mobility management network element, where the report information includes a name of a data network corresponding to the remote terminal device; send a request message to a data management network element, where the request message includes the subscription permanent identifier and the name of the data network; and receive information from the data management network element, where the information is for determining whether to perform secondary authentication on the remote terminal device; and a processing module, configured to determine, based on the information, whether to perform secondary authentication on the remote terminal device.

With reference to the thirteenth aspect, in some implementations of the thirteenth aspect, the information includes at least one of the following information: subscription data that is of the remote terminal device and that corresponds to the data network and is related to session management, first indication information, and second indication information, where the first indication information indicates whether secondary authentication needs to be performed on the remote terminal device, and the second indication information indicates whether a previous time of secondary authentication on the remote terminal device succeeds.

According to a fourteenth aspect, a communication apparatus is provided. The communication apparatus includes: a processing module, configured to generate report information of a remote terminal device, where the report information includes a name of a data network corresponding to the remote terminal device; and a transceiver module, configured to send, to a mobility management network element, the report information and a transaction identifier corresponding to the remote terminal device.

With reference to the fourteenth aspect, in some implementations of the fourteenth aspect, the processing module is further configured to determine the name of the data network based on a relay service code corresponding to the remote terminal device.

With reference to the thirteenth aspect, in some implementations of the thirteenth aspect, the transceiver module is further configured to receive an authentication command message from the mobility management network element, where the authentication command message includes identification information of the remote terminal device, and the authentication command message is for requesting to perform secondary authentication on the remote terminal device; the processing module is further configured to obtain identity information of the remote terminal device based on the authentication command message; and the relay terminal device sends the identity information to the mobility management network element.

According to a fifteenth aspect, a communication apparatus is provided. The communication apparatus includes: a transceiver module, configured to: receive report information of a remote terminal device from a mobility management network element, where the report information includes a subscription concealed identifier of the remote terminal device and a name of a data network corresponding to the remote terminal device; send a request message to a data management network element, where the request message includes the subscription concealed identifier and the name of the data network; receive information from the data management network element, where the information is for determining whether to perform secondary authentication on the remote terminal device; and a processing module, configured to determine, based on the information, whether to perform secondary authentication on the remote terminal device.

With reference to the fifteenth aspect, in some implementations of the fifteenth aspect, the information includes at least one of the following information: subscription data that is of the remote terminal device and that corresponds to the data network and is related to session management, first indication information, and second indication information, where the first indication information indicates whether secondary authentication needs to be performed on the remote terminal device, and the second indication information indicates whether a previous time of secondary authentication on the remote terminal device succeeds.

According to a sixteenth aspect, a communication apparatus is provided. The communication apparatus includes: a transceiver module, configured to receive a subscription concealed identifier of a remote terminal device from the remote terminal device; and a processing module, configured to generate report information of the remote terminal device, where the report information includes the subscription concealed identifier and a name of a data network corresponding to the remote terminal device, where the transceiver module is further configured to send the report information of the remote terminal device to a mobility management network element.

With reference to the sixteenth aspect, in some implementations of the sixteenth aspect, the processing module is further configured to determine the name of the data network based on a transaction identifier of the remote terminal device.

With reference to the sixteenth aspect, in some implementations of the sixteenth aspect, the transceiver module is further configured to receive an authentication command message from the mobility management network element, where the authentication command message includes identification information of the remote terminal device, and the authentication command message is for requesting to perform secondary authentication on the remote terminal device; the processing module is further configured to obtain identity information of the remote terminal device based on the authentication command message; and the transceiver module is further configured to send the identity information to the mobility management network element.

According to a seventeenth aspect, a communication apparatus is provided. The communication apparatus includes: a transceiver module, configured to receive a direct security mode command message from a relay terminal device; and a processing module, configured to generate a subscription concealed identifier of the remote terminal device, where the remote terminal device sends a direct security mode complete message to the relay terminal device, where the direct security mode complete message includes identification information of the remote terminal device.

According to an eighteenth aspect, a communication apparatus is provided. The communication apparatus includes: a transceiver module, configured to: receive identification information of a remote terminal device and first information from a mobility management network element, where the first information is for determining a data network corresponding to the remote terminal device; send a request message to a data management network element, where the request message includes the identification information of the remote terminal device and the first information; and receive second information from the data management network element, where the second information is for determining whether to perform secondary authentication on the remote terminal device; and a processing module, configured to determine, based on the second information, whether to perform secondary authentication on the remote terminal device.

With reference to the seventeenth aspect, in some implementations of the seventeenth aspect, the first information includes at least one of a relay service code, a data network name, and a proximity-based services relay user key identifier that correspond to the remote terminal device.

With reference to the seventeenth aspect, in some implementations of the seventeenth aspect, the transceiver module is specifically configured to receive report information from the relay terminal device, where the report information includes the identification information of the remote terminal device and the first information.

With reference to the seventeenth aspect, in some implementations of the seventeenth aspect, the second information includes at least one of the following information: session management subscription data that is of the remote terminal device and that corresponds to the data network, first indication information, and second indication information, where the first indication information indicates whether secondary authentication needs to be performed on the remote terminal device, and the second indication information indicates whether a previous time of secondary authentication on the remote terminal device succeeds.

According to a nineteenth aspect, a communication apparatus is provided. The communication apparatus includes: a transceiver module, configured to receive a request message and first information from a session management network element, where the request message includes identification information of a remote terminal device, and the first information is for determining a data network corresponding to the remote terminal device; and a processing module, configured to: obtain, based on the identification information and a data network name that are of the remote terminal device, session management subscription data that is of the remote terminal device and that corresponds to the data network name, where the data network name is determined based on the first information; and send second information to the session management network element based on the subscription data of the remote terminal device, where the second information is used by the session management network element to determine whether to perform secondary authentication on the remote terminal device.

With reference to the eighteenth aspect, in some implementations of the eighteenth aspect, the processing module is specifically configured to: obtain a relay service code of the remote terminal device; and determine, based on the relay service code of the remote terminal device, the data network name corresponding to the remote terminal device.

With reference to the eighteenth aspect, in some implementations of the eighteenth aspect, the processing module is specifically configured to obtain, for the data management network element, the relay service code from the request message.

With reference to the eighteenth aspect, in some implementations of the eighteenth aspect, the processing module is specifically configured to obtain, for the data management network element, the data network name from the request message.

With reference to the eighteenth aspect, in some implementations of the eighteenth aspect, the second information includes at least one of the following information: the session management subscription data that is of the remote terminal device and that corresponds to the data network name, first indication information, and second indication information, where the first indication information indicates whether secondary authentication needs to be performed on the remote terminal device, and the second indication information indicates whether a previous time of secondary authentication on the remote terminal device succeeds.

With reference to the eighteenth aspect, in some implementations of the eighteenth aspect, the identification information of the remote terminal device is a subscription concealed identifier of the remote terminal device, and the processing module is specifically configured to: determine a subscription permanent identifier of the remote terminal device based on the subscription concealed identifier; and obtain, based on the subscription permanent identifier and the data network name, the session management subscription data that is of the remote terminal device and that corresponds to the data network name.

According to a twentieth aspect, a communication apparatus is provided. The communication apparatus includes: a transceiver module, configured to: receive identification information of a remote terminal device from the remote terminal device; and send, to a session management network element, the identification information of the remote terminal device and first information corresponding to the remote terminal device, where the first information is for determining a data network corresponding to the remote terminal device.

With reference to the twentieth aspect, in some implementations of the twentieth aspect, the first information includes at least one of a relay service code, a data network name, and a proximity-based services relay user key identifier that correspond to the remote terminal device.

With reference to the twentieth aspect, in some implementations of the twentieth aspect, the first information includes the data network name of the remote terminal device, and a processing module is further configured to: determine the relay service code corresponding to the remote terminal device; and determine the data network name based on the relay service code.

With reference to the twentieth aspect, in some implementations of the twentieth aspect, the transceiver module is specifically configured to send report information to the session management network element, where the report information includes the identification information of the remote terminal device and the first information.

With reference to the twentieth aspect, in some implementations of the twentieth aspect, the identification information of the remote terminal device is a subscription concealed identifier of the remote terminal device.

With reference to the twentieth aspect, in some implementations of the twentieth aspect, the transceiver module is configured to: send a direct security mode command message to the remote terminal device; and receive a direct security mode complete message from the remote terminal device, where the direct security mode complete message includes the identification information of the remote terminal device.

According to a twenty-first aspect, a communication apparatus is provided. The communication apparatus includes: a transceiver module, configured to receive, from a relay terminal device, a transaction identifier specific to a remote terminal device; and a processing module, configured to determine, based on the transaction identifier, identification information of the remote terminal device corresponding to the transaction identifier, where the transceiver module is further configured to send the identification information of the remote terminal device to a session management network element.

With reference to the twenty-first aspect, in some implementations of the twenty-first aspect, the processing module is further configured to store a correspondence between the transaction identifier and the identification information of the remote terminal device.

With reference to the twenty-first aspect, in some implementations of the twenty-first aspect, the processing module is specifically configured to determine the identification information of the remote terminal device based on the transaction identifier and the correspondence.

With reference to the twenty-first aspect, in some implementations of the twenty-first aspect, the processing module is further configured to determine, based on the transaction identifier, a data network name corresponding to the remote terminal device; and the transceiver module is further configured to send the data network name to the session management network element.

With reference to the twenty-first aspect, in some implementations of the twenty-first aspect, first information includes at least one of a relay service code, the data network name, and a proximity-based services relay user key identifier that correspond to the remote terminal device.

With reference to the twenty-first aspect, in some implementations of the twenty-first aspect, the processing module is further configured to store a correspondence between the transaction identifier and the identification information of the remote terminal device.

According to a twenty-second aspect, a communication apparatus is provided. The communication apparatus includes: a transceiver module, configured to receive a direct security mode command message from a relay terminal device; and a processing module, configured to generate identification information of the remote terminal device, where the remote terminal device sends a direct security mode complete message to the relay terminal device, where the direct security mode complete message includes the identification information of the remote terminal device.

With reference to the twenty-second aspect, in some implementations of the twenty-second aspect, the transceiver module is further configured to send, to the relay terminal device, a data network name corresponding to the remote terminal device.

With reference to the twenty-second aspect, in some implementations of the twenty-second aspect, the identification information of the remote terminal device is a subscription concealed identifier of the remote terminal device.

According to a twenty-third aspect, a communication apparatus is provided. The apparatus is configured to perform any method according to the first aspect to the eleventh aspect. Specifically, the apparatus may include units and/or modules configured to perform the methods provided in the first aspect to the eleventh aspect, for example, a processing module and/or a transceiver module (which may also be referred to as a communication module). In an implementation, the apparatus is a network device. For example, the apparatus is a mobility management network element, a session management network element, or a data management network element. When the apparatus is the network device, the communication module may be a transceiver or an input/output interface, and the processing module may be a processor.

In an implementation, the apparatus is a chip, a chip system, or a circuit used in a network device. When the apparatus is a chip, a chip system, or a circuit used in a communication device, the communication module may be an input/output interface, an interface circuit, an output circuit, an input circuit, a pin, a related circuit, or the like on the chip, the chip system, or the circuit, and the processing module may be a processor, a processing circuit, a logic circuit, or the like.

In a possible case, the apparatus is a chip, a chip system, or a circuit in the mobility management network element. In this case, the apparatus may include a unit and/or a module configured to perform the method according to the first aspect, for example, a processing unit and/or a communication unit.

In another possible case, the apparatus is the session management network element, or a chip, a chip system, or a circuit in the session management network element. In this case, the apparatus may include a unit and/or a module configured to perform the method according to any one of the second aspect, the fourth aspect, the seventh aspect, and the tenth aspect, for example, a processing module and/or a transceiver module.

In another possible case, the apparatus is the data management network element, or a chip, a chip system, or a circuit in the data management network element. In this case, the apparatus may include a unit and/or a module configured to perform the method according to the eighth aspect, for example, a processing module and/or a transceiver module.

In another implementation, the apparatus is a terminal device. For example, the apparatus is a relay terminal device or a remote terminal device. When the apparatus is the terminal device, a communication unit may be a transceiver or an input/output interface, and a processing unit may be a processor.

In a possible case, the apparatus is the relay terminal device, or a chip, a chip system, or a circuit in the relay terminal device. In this case, the apparatus may include a unit and/or a module configured to perform the method according to any one of the third aspect, the fifth aspect, and the ninth aspect, for example, a processing module and/or a transceiver module.

In another possible case, the apparatus is the remote terminal device, or a chip, a chip system, or a circuit in the remote terminal device. In this case, the apparatus may include a unit and/or a module configured to perform the method according to any one of the second aspect, the sixth aspect, and the eleventh aspect, for example, a processing module and/or a transceiver module.

Optionally, the transceiver may be a transceiver circuit. Optionally, the input/output interface may be an input/output circuit.

Optionally, the transceiver may be a transceiver circuit. Optionally, the input/output interface may be an input/output circuit.

According to a twenty-fourth aspect, a communication apparatus is provided. The apparatus includes: a memory, configured to store a program; and a processor, configured to execute the program stored in the memory. When the program stored in the memory is executed, the processor is configured to perform any method according to the first aspect to the fifth aspect.

According to a twenty-fifth aspect, this application provides a processor, configured to perform the methods provided in the foregoing aspects. In a process of performing the methods, a process of sending the foregoing information and a process of obtaining/receiving the foregoing information in the foregoing methods may be understood as a process of outputting the foregoing information by the processor and a process of receiving the foregoing input information by the processor. When outputting the information, the processor outputs the foregoing information to a transceiver, so that the transceiver transmits the foregoing information. After the foregoing information is output by the processor, other processing may further need to be performed on the foregoing information before the foregoing information arrives at the transceiver. Similarly, when the processor receives the foregoing input information, the transceiver obtains/receives the foregoing information, and inputs the foregoing information into the processor. Further, after the transceiver receives the foregoing information, other processing may need to be performed on the foregoing information before the foregoing information is input into the processor.

Based on the foregoing principle, for example, receiving the request message in the foregoing methods may be understood as receiving input information by the processor.

Unless otherwise specified, or if operations such as transmitting, sending, and obtaining/receiving related to the processor do not contradict an actual function or internal logic of the operations in related descriptions, all the operations may be more generally understood as operations such as outputting, receiving, and inputting of the processor, instead of operations of transmitting, sending, and receiving directly performed by a radio frequency circuit and an antenna.

In an implementation process, the processor may be a processor specially configured to perform the methods, or a processor, for example, a general-purpose processor, that executes computer instructions in a memory to perform the methods. The memory may be a non-transitory (non-transitory) memory, for example, a read-only memory (read only memory, ROM). The memory and the processor may be integrated on a same chip, or may be separately disposed on different chips. A type of the memory and a manner of disposing the memory and the processor are not limited in this embodiment of this application.

According to a twenty-sixth aspect, a computer-readable storage medium is provided. The computer-readable medium stores program code to be executed by a device, and the program code is for performing any method according to the first aspect to the fifth aspect.

According to a twenty-seventh aspect, a computer program product including instructions is provided. When the computer program product runs on a computer, the computer is enabled to perform any method according to the first aspect to the fifth aspect.

According to a twenty-eighth aspect, a chip is provided. The chip includes a processor and a communication interface. The processor reads, through the communication interface, instructions stored in a memory, to perform any method according to the first aspect to the fifth aspect.

Optionally, in an implementation, the chip may further include the memory. The memory stores the instructions, and the processor is configured to execute the instructions stored in the memory. When the instructions are executed, the processor is configured to perform any method according to the first aspect to the fifth aspect.

According to a twenty-ninth aspect, a communication system is provided, and includes one or more of the foregoing mobility management network element, session management network element, and data management network element.

Optionally, the communication system may further include the foregoing relay terminal device.

Optionally, the communication system may further include the foregoing remote terminal device.

### BRIEF DESCRIPTION OF DRAWINGS

(a) in FIG. 1 and (b) in FIG. 1 are diagrams of network architectures applicable to embodiments of this application;
FIG. 2A and FIG. 2B are a diagram of a control plane procedure 200;
FIG. 3 is a diagram of a secondary authentication procedure 300 according to an embodiment of this application;
FIG. 4 is a schematic flowchart of a communication method 400 according to an embodiment of this application;
FIG. 5A and FIG. 5B are a schematic flowchart of a communication method 500 according to an embodiment of this application;
FIG. 6A and FIG. 6B are a schematic flowchart of a communication method 600 according to an embodiment of this application;
FIG. 7A and FIG. 7B are a schematic flowchart of a communication method 700 according to an embodiment of this application;
FIG. 8 is a schematic block diagram of a communication apparatus according to an embodiment of this application;
FIG. 9 is a schematic block diagram of a communication apparatus according to another embodiment of this application; and
FIG. 10 is a schematic block diagram of a communication apparatus according to still another embodiment of this application.

### DESCRIPTION OF EMBODIMENTS

To make the objectives, technical solutions, and advantages of this application clearer, the following further describes this application in detail with reference to the accompanying drawings. A specific operation method in a method embodiment may also be applied to an apparatus embodiment or a system embodiment. In the descriptions of this application, unless otherwise specified, "a plurality of" means two or more than two.

In various embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

It may be understood that various numerals in this application are for differentiation merely for ease of description, but are not for limiting the scope of this application. Sequence numbers of the foregoing processes do not mean an execution sequence, and the execution sequence of the processes should be determined based on functions and internal logic of the processes.

In this specification, the claims, and the accompanying drawings of this application, the terms "first", "second", "third", "fourth", and various other ordinal number terms (if existent) are intended to distinguish between similar objects, but do not necessarily indicate a specific order or sequence. It should be understood that the data termed in such a way is interchangeable in appropriate circumstances, so that embodiments described herein can be implemented in orders other than the order illustrated or described herein. In addition, the terms "include" and "have" and any variant thereof are intended to cover the non-exclusive inclusion. For example, a process, method, system, product, or device that includes a list of steps or units is not necessarily limited to those expressly listed steps or units, but may include other steps or units not expressly listed or inherent to such a process, method, product, or device.

The technical solutions provided in this application may be applied to various communication systems, for example, a 5th generation (5th generation, 5G) or new radio (new radio, NR) system, a long term evolution (long term evolution, LTE) system, an LTE frequency division duplex (frequency division duplex, FDD) system, and an LTE time division duplex (time division duplex, TDD) system. The technical solutions provided in this application may be further applied to a future communication system such as a sixth generation mobile communication system. The technical solutions provided in this application may be further applied to device-to-device (device-to-device, D2D) communication, vehicle-to-everything (vehicle-to-everything, V2X) communication, machine-to-machine (machine-to-machine, M2M) communication, machine type communication (machine type communication, MTC), an internet of things (internet of things, IoT) communication system, or another communication system.

The following describes technical solutions in embodiments of this application with reference to the accompanying drawings in embodiments of this application. In the descriptions of this application, unless otherwise specified, "/" indicates that associated objects are in an "or" relationship. For example, A/B may represent A or B. In this application, "and/or" describes only an association relationship between associated objects and represents that three relationships may exist. For example, A and/or B may indicate: Only A exists, both A and B exist, and only B exists, where A and B may be singular or plural. In addition, in the descriptions of this application, unless otherwise specified, "a plurality of" means two or more than two. "At least one of the following" or a similar expression thereof means any combination of these items, and includes a singular item or any combination of plural items. For example, at least one of a, b, or c may represent a, b, c, a combination of a and b, a combination of a and c, a combination of b and c, or a combination of a, b, and c, where a, b, and c may be in a singular or plural form. In addition, for ease of clear description of the technical solutions in embodiments of this application, terms such as "first" and "second" are used in embodiments of this application to distinguish between same items or similar items that provide basically same functions. A person skilled in the art may understand that the terms such as "first" and "second" do not limit a quantity or an execution sequence, and the terms such as "first" and "second" do not indicate a definite difference. In addition, in embodiments of this application, terms such as "example" or "for example" are for representing giving an example, an illustration, or descriptions. Any embodiment or design scheme described as an "example" or "for example" in embodiments of this application should not be explained as being more preferred or having more advantages than another embodiment or design scheme. Exactly, use of the terms such as "example" or "for example" is intended to present a related concept in a specific manner for ease of understanding.

In addition, the network architecture and the service scenario in embodiments of this application are intended to describe the technical solutions in embodiments of this application more clearly, and do not constitute a limitation on the technical solutions provided in embodiments of this application. A person of ordinary skill in the art may know that, with the evolution of the network architecture and the emergence of a new service scenario, the technical solutions provided in embodiments of this application are also applicable to similar technical problems.

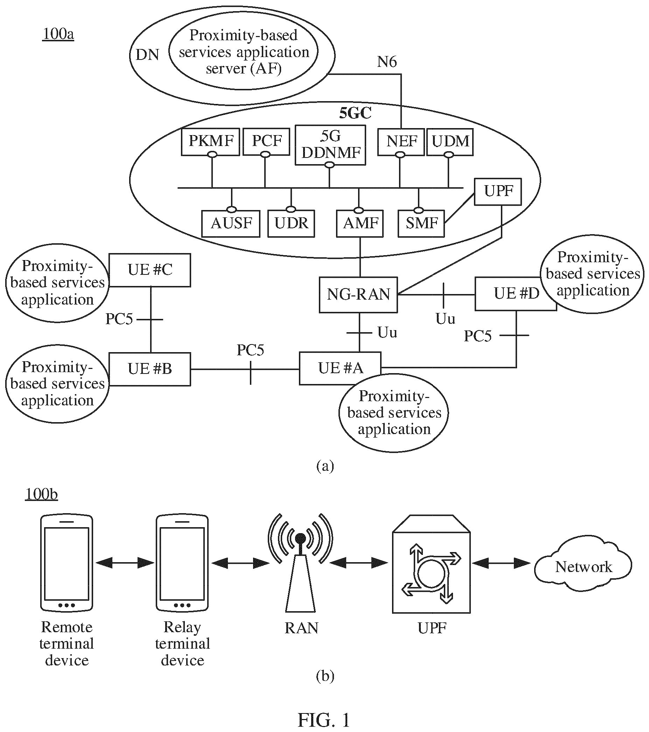

For ease of understanding of embodiments of this application, an application scenario of embodiments of this application is described below in detail with reference to (a) in FIG. 1.

(a) in FIG. 1 is a diagram of a network architecture applicable to a method according to an embodiment of this application. As shown in the figure, the network architecture may specifically include the following network elements.
1. A user equipment (user equipment, LTE) may be referred to as a terminal device, a terminal, an access terminal, a subscriber unit, a subscriber station, a mobile station, a remote station, a remote terminal, a mobile device, a user terminal, a wireless communication device, a user agent, or a user apparatus. Alternatively, the terminal device may be a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device, another processing device connected to a wireless modem, a vehicle-mounted device, an uncrewed aerial vehicle, a wearable device, a terminal device in a 5G network, a terminal device in an evolved public land mobile network (public land mobile network, PLMN), or the like. This is not limited in embodiments of this application. The UE may be connected to a next generation radio access network (next generation radio access network, NG-RAN) device through a Uu interface. For example, a UE #A and a UE #D shown in (a) in FIG. 1 are connected to the NG-RAN through Uu interfaces. Two UEs having a proximity-based services application (proximity-based services application, ProSe application) function may alternatively be connected to each other through a PC5 interface. For example, as shown in (a) in FIG. 1, the UE #A and a UE #B are connected to each other through a PC5 interface, the UE #B and a UE #C are connected to each other through a PC5 interface, and the UE #A and the UE #D are connected through a PC5 interface.
2. An access network (access network, AN) provides a network access function for an authorized user in a specific area, and can use transmission tunnels of different quality based on a user level, a service requirement, and the like. The access network may be an access network for which different access technologies are used. A current access network technology includes a radio access network technology used in a 3rd generation (3rd generation, 3G) system, a radio access network technology used in a 4G system, an NG-RAN technology shown in (a) in FIG. 1 (for example, a radio access technology used in a 5G system), or the like.

An access network that implements an access network function based on a wireless communication technology may be referred to as a radio access network (radio access network, RAN). The radio access network can manage a radio resource, provide an access service for a terminal, and further complete forwarding of a control signal and user data between the terminal and a core network.

A radio access network device may be, for example, a NodeB (NodeB), an evolved NodeB (evolved NodeB, eNB or eNodeB), a next generation node base station (next generation Node Base station, gNB) in a 5G mobile communication system, a base station in a future mobile communication system, an access point (access point, AP) in a Wi-Fi (Wi-Fi) wireless hotspot system, or the like, or may be a radio controller in a cloud radio access network (cloud radio access network, CRAN) scenario. Alternatively, the radio access network device may be a relay station, an access point, a vehicle-mounted device, an uncrewed aerial vehicle, a wearable device, a network device in a 5G network, a network device in an evolved PLMN, or the like. A specific technology used by the radio access network device and a specific device form are not limited in embodiments of this application.

3. An access management network element is mainly for mobility management and access management, is responsible for transferring a user policy or the like between a user equipment and a policy control function (policy control function, PCF) network element, and may be configured to implement a function other than session management in a mobility management entity (mobility management entity, MME) function, for example, a lawful interception function or an access authorization (authentication) function.

In a 5G communication system, the access management network element may be an access and mobility management function (access and mobility management function, AMF) network element. In a future communication system, the access management network element may still be the AMF network element, or may have another name. This is not limited in this application.

4. A session management network element is mainly for session management, assignment and management of an internet protocol (internet protocol, IP) address of a user equipment, selection and control of a user plane function, termination of interfaces toward policy control and charging functions, downlink data notification, and the like.

In a 5G communication system, the session management network element may be a session management function (session management function, SMF) network element. In a future communication system, the session management network element may still be the SMF network element, or may have another name. This is not limited in this application.

5. A user plane network element is configured to: perform packet routing and forwarding, perform quality of service (quality of service, QoS) handling for user plane data, complete user plane data forwarding, perform session/flow-level charging statistics collection, implement a bandwidth limiting function, and so on.

In a 5G communication system, the user plane network element may be a user plane function (user plane function, UPF) network element. In a future communication system, the user plane network element may still be the UPF network element, or may have another name. This is not limited in this application.

6. A data network network element is configured to provide a network for data transmission.

In a 5G communication system, the data network network element may be a data network (data network, DN) network element. In a future communication system, the data network network element may still be the DN network element, or may have another name. This is not limited in this application.

7. A policy control network element is configured to: provide a unified policy framework for governing network behavior, provide policy rule information for a control plane function network element (for example, an AMF or SMF network element), and so on.

In a 4G communication system, the policy control network element may be a policy and charging rules function (policy and charging rules function, PCRF) network element. In a 5G communication system, the policy control network element may be a policy control function (policy control function, PCF) network element. In a future communication system, the policy control network element may still be the PCF network element, or may have another name. This is not limited in this application.

8. A data management network element is configured to process an identifier of a user equipment, and perform access authentication, registration, and mobility management, and the like.

In a 5G communication system, the data management network element may be a unified data management (unified data management, UDM) network element. In a 4G communication system, the data management network element may be a home subscriber server (home subscriber server, HSS) network element. In a future communication system, the data management network element may still be the UDM network element, or may have another name. This is not limited in this application.

9. A data repository network element is configured to be responsible for an access function of subscription data, policy data, application data, and other types of data.

In a 5G communication system, the data repository network element may be a unified data repository (unified data repository, UDR) network element. In a future communication system, the data repository network element may still be the UDR network element, or may have another name. This is not limited in this application.

10. A network exposure function (network exposure function, NEF) entity is configured to securely expose, to the outside, a service and a capability that are provided by a 3GPP network function, and so on.

11. A ProSe application server (application server, AS) may be an application function (application function, AF) of a DN, or may be an AS that provides a ProSe service. An AF that has a ProSe application server function has all functions of the AF defined in Release 23.501 R-15 and a related function used for a ProSe service. In other words, in a user plane architecture, the ProSe application server performs user plane communication with a UE through a UE-RAN-UPF-AF path. The ProSe application server may alternatively communicate with another network function (network function, NF) in a 5G core network (5G core network, 5GC) via an NEF in a control plane architecture, for example, communicates with a PCF via the NEF. If the ProSe application server is the AF of the DN, and the AF is deployed by an operator of a 5GC, the ProSe application server may alternatively directly communicate with another NF in the 5GC without using an NEF in a control plane architecture, for example, directly communicate with a PCF.

12. A 5G direct discovery name management function (direct discovery name management function, DDNMF) has a function of allocating and processing a mapping relationship between a proximity-based services application identifier (ProSe application identifier) and a proximity-based services application code (ProSe application code) for open proximity-based services discovery (open ProSe discovery). In restricted proximity-based services direct discovery (restricted ProSe direct discovery), the 5G DDNMF may communicate with a proximity-based services application server through a PC2 interface, to process authorization of a discovery request (discovery request), and also have a function of not allocating and processing a mapping relationship between an application identifier (application identifier) and codes used in restricted proximity-based services, where the codes used in the restricted proximity-based services include a proximity-based services restricted code (ProSe restricted code), a proximity-based services query code (ProSe query code), and a proximity-based services response code (ProSe response code).

In the current standard definition, the 5G DDNMF is at a PLMN granularity. That is, one PLMN has only one 5G DDNMF. The 5G DDNMF may be uniquely determined based on a mobile country code (mobile country code, MCC) and a mobile network code (mobile network code, MNC).

13. An authentication server function (authentication server function, AUSF) is a network element for performing authentication and authorization on a user.

14. A proximity-based services key management function (ProSe key management function, PKMF) may be responsible for generating and distributing, for a LTE that uses proximity-based services, a key used for a PC5 interface connection. The UE needs to interact with the PKMF via a control plane, to obtain the key used for the PC5 interface.

It may be understood that the foregoing network element or function may be a network element in a hardware device, may be a software function running on dedicated hardware, or may be a virtualized function instantiated on a platform (for example, a cloud platform). The foregoing network element or function may be implemented by one device, may be jointly implemented by a plurality of devices, or may be a functional module in one device. This is not specifically limited in embodiments of this application.

It should be further understood that the network architecture applicable to embodiments of this application shown in (a) in FIG. 1 is merely an example for description, and the network architecture applicable to embodiments of this application is not limited thereto. Any network architecture that can implement functions of the network elements is applicable to embodiments of this application.

For example, in some network architectures, network function network element entities such as an AMF, an SMF network element, a PCF network element, and a UDM network element are all referred to as network function (network function, NF) network elements. Alternatively, in some other network architectures, a set of network elements such as an AMF, an SMF network element, a PCF network element, and a UDM network element may be referred to as control plane function network elements. Because a LTE needs to interact with a PKMF and a DDNMF via a user plane, network elements such as the PKMF and the DDNMF may be referred to as user plane network elements.

(b) in FIG. 1 is a diagram of another communication system architecture according to an embodiment of this application. When a remote terminal device is located outside network coverage, or signal quality between the remote terminal device and an access network device is poor (for example, lower than a preset threshold), the remote terminal device may be assisted by a relay terminal device, and communication between the remote terminal device and the access network device is implemented through communication between the remote terminal device and the relay terminal device and communication between the relay terminal device and the access network device. For example, as shown in (b) in FIG. 1, the remote terminal device may communicate with a RAN via the relay terminal device.

With rapid development of mobile communication, universal use of new service types, for example, a video service and a data service such as virtual reality (virtual reality, VR)/augmented reality (augmented reality, AR), improves a bandwidth requirement of a user. D2D communication allows direct communication between UEs, and the UEs may share a spectrum resource with a cell user under control of a cell network, to effectively improve spectrum resource utilization. Currently, the D2D communication has been applied to 4G and 5G network systems, and is collectively referred to as proximity-based services (proximity-based services, ProSe) communication.

When a UE is outside network coverage, or a communication signal between the LTE and the RAN is poor, a remote LTE (remote UE) may perform communication with assistance of a relay UE (relay UE). That is, the remote UE obtains a service through communication between the remote UE and the relay UE and communication between the relay UE and a mobile network. Through establishment of a communication manner from the remote UE to the relay UE to the network, it may be extended to support communication from the UE outside the network coverage to the network. The communication manner from the remote UE to the relay UE to the network may be referred to as UE-to-network relay (UE-to-network relay) communication.

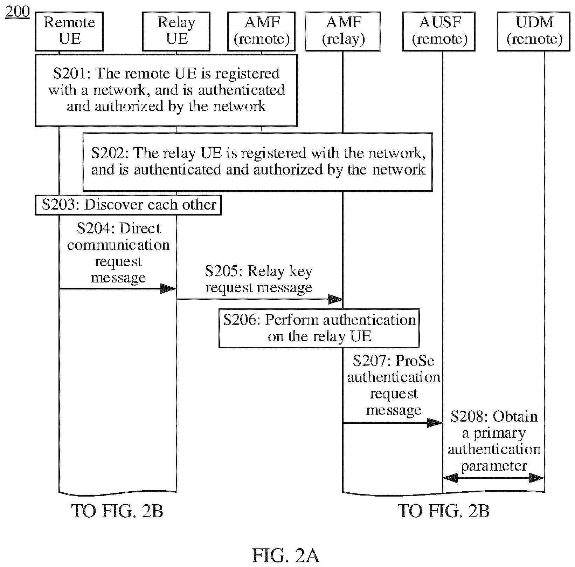

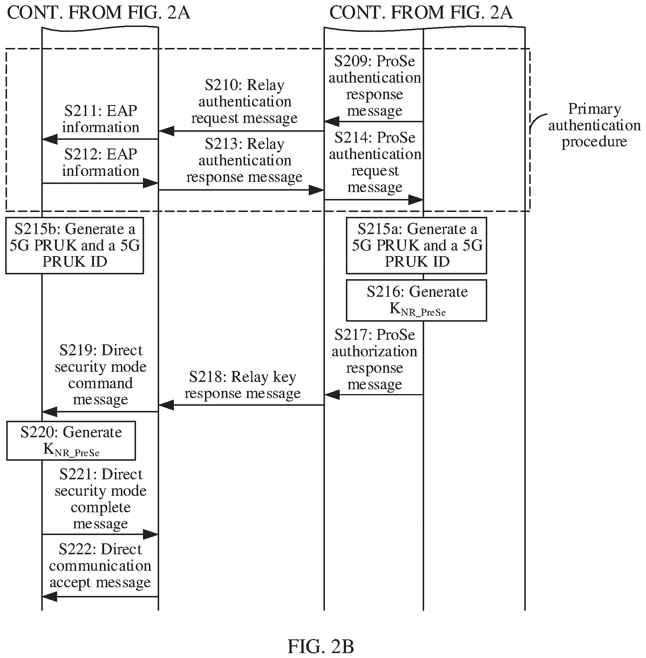

The following describes a ProSe control plane (control plane, CP) procedure with reference to FIG. 2A and FIG. 2B. The CP procedure is a process in which a remote UE obtains, via a NAS message of a relay UE, a key for establishing PC5 security with the relay UE. It should be noted that, in a flowchart of a method 300, an AMF (remote) is an AMF corresponding to the remote UE, and the AMF may also be denoted as a remote AMF. Similarly, an AMF (relay) is an AMF of the relay UE, and the AMF may be denoted as a relay AMF. Remaining network elements may be explained in a similar manner, and are not described herein one by one. The following describes the CP procedure by using an example with reference to steps in the method 200. For a part that is not described in detail, refer to an existing protocol.

S201: The remote UE is registered with a network, and is authenticated and authorized by the network.

S202: The relay UE is registered with the network, and is authenticated and authorized by the network.

S203: The remote UE and the relay UE discover each other.

S204: The remote UE sends a direct communication request (Direct Communication Request) message to the relay UE, where the message carries a subscription concealed identifier (subscription concealed identifier, SUCI), a relay service code (relay service code, RSC), Nounce_1, and the like of the remote UE. The SUCI is temporary UE identity information, and is for providing privacy protection. The SUCI includes at least a result of encryption of a non-SUPI type part of an SUPI. The SUCI of the remote UE is used by a UDM to obtain the SUPI of the remote UE and perform authentication on the remote UE. The RSC is used by the remote UE and the relay UE to discover each other, and indicates information about a service that the relay may provide for the remote UE. One relay UE may support a plurality of different RSCs, but only one RSC can be carried during each time of discovery. The RSC is delivered by a network side to the relay UE and the remote UE. In addition, the network side further delivers a parameter related to a PDU session, for example, a DNN or single network slice selection assistance information (single network slice selection assistance information, S-NSSAI). Nounce_1 is for being transferred to a home network of the remote UE to be used as a key generation parameter.

S205: The relay UE sends a relay key request (Relay Key Request) message to the AMF (relay), where the AMF is the AMF corresponding to the relay UE, or in other words, the AMF is an AMF that provides an access service for the relay UE; and the message is the NAS message, and the message includes identity information of the relay UE, and the SUCI, the RSC, Nounce_1, and the like of the remote UE.

S206: The AMF performs authentication on the relay UE. For example, the AMF checks whether the relay UE can provide a relay service, or in other words, the AF checks whether the relay UE can serve as a relay device. If the relay UE can provide the relay service or serve as the relay device, a subsequent procedure is performed.

S207: The AMF sends a ProSe authentication request (Nausf_UEAuthentication_ProseAuthenticate Request) message to an AUSF (Remote), where the AUSF corresponds to the remote UE, and the ProSe authentication request message carries the SUCI, the RSC, Nounce_1, and the like of the remote UE.

S208: The AUSF obtains a primary authentication parameter via the UDM. For example, the AUSF sends a service-oriented request message to the UDM, to request the primary authentication parameter, and the UDM returns the primary authentication parameter to the AUSF based on the request of the AUSF.

After obtaining the primary authentication parameter, the AUSF triggers a primary authentication procedure of the remote UE. The remote UE performs the primary authentication procedure with the AUSF of the remote UE via the relay UE. A specific procedure is shown in S209 to S214. For a detailed process, refer to an existing protocol. Details are not described herein again.

S215a: The remote UE generates a 5G PRUK and a 5G PRUK ID.

S215b: The AUSF generates a 5G PRUK and a 5G PRUK ID.

For example, after the primary authentication procedure succeeds, the AUSF of the remote LTE and the remote UE separately generate the key 5G PRUK and the key identifier 5G PRUK ID.

S216: The AUSF of the remote UE further generates a key K_{NR_ProSe}.

S217: The AUSF sends a ProSe authorization response message to the AMF of the relay UE, where the ProSe authorization response message includes K_{NR_ProSe}, Nounce_2, the 5G PRUK ID, and the like. When generating K_{NR_Prose}, the AUSF uses K_{NR_prose} and Nounce_1 as input parameters to generate Nounce_2.

S218: The AMF sends a relay key response (Relay Key Response) message to the relay UE, where the relay key response message includes K_{NR_ProSe}, Nounce_2, the 5G PRUK ID, and the like.

S219: After receiving the relay key response message, the relay UE stores K_{NR_Prose}, and generates K_{relay-sess} by using K_{NR_ProSe}, and then the relay UE sends a direct security mode command (Direct Security mode command) message to the remote LTE, where the direct security mode command message includes Nounce_2, the 5G PRUK ID, and the like.

S220: After receiving the direct security mode command message from the relay UE, the remote UE generates K_{relay-sess} by using K_{NR_ProSe}.

S221: The remote UE sends a direct security mode complete (Direct Security Complete) message to the relay UE.

S222: The relay UE sends a direct communication accept (Direct Communication Accept) message to the remote UE.

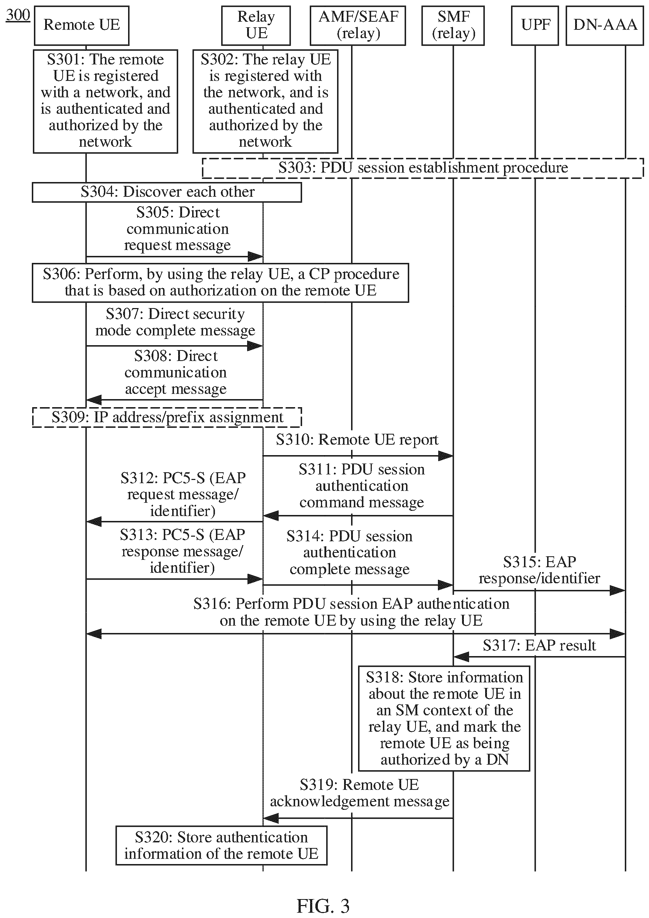

The primary authentication procedure is briefly described in the method 200. However, with development of a vertical industry and an internet of things, a DN other than an operator network also has an authentication and authorization requirement, namely, a secondary authentication (secondary authentication) requirement, for some UEs that are to access the DN. In such an authentication manner, the data network other than the operator network may perform authentication or authorization on the UEs through the operator network. A method 300 in FIG. 3 shows a procedure of performing secondary authentication on a remote UE in a ProSe scenario. The following describes the method 300 by using an example with reference to steps in FIG. 3.

S301: The remote UE is registered with a network, and is authenticated and authorized by the network.

S302: A relay LTE is registered with the network, and is authenticated and authorized by the network.

Optionally, in S303, the relay LTE performs a PDU session establishment procedure by using core network elements.

S304 to S308 are similar to S203 to S222 in the method 300. Details are not described herein again. However, it should be noted that S306 in the method 300 corresponds to S205 to S220 in the method 200. For brevity, a detailed procedure is not shown in FIG. 3.

Optionally, in S309, the remote UE and the relay UE perform IP address (IP address)/prefix (prefix) assignment.

S310: The relay UE sends a remote UE report (Remote UE Report) to an SMF. For example, the relay UE encapsulates, in a NAS message, a message carrying the remote UE report, and sends, to an AMF, the message carrying the remote UE report; and then the AMF sends, to the SMF, the message carrying the remote UE report. The remote UE report includes user info (or a remote user ID) and IP info.

After receiving the remote UE report, the SMF determines whether secondary authentication needs to be performed on the remote LTE. If secondary authentication needs to be performed on the remote LTE, the SMF performs S311 to trigger the secondary authentication. For a specific procedure (S311 to S320), refer to an existing protocol. Details are not described herein again.

In the method 300, the procedure of performing secondary authentication on the remote UE in the ProSe scenario is described. However, there is no solution currently to how the SMF determines whether secondary authentication needs to be performed on the remote UE.

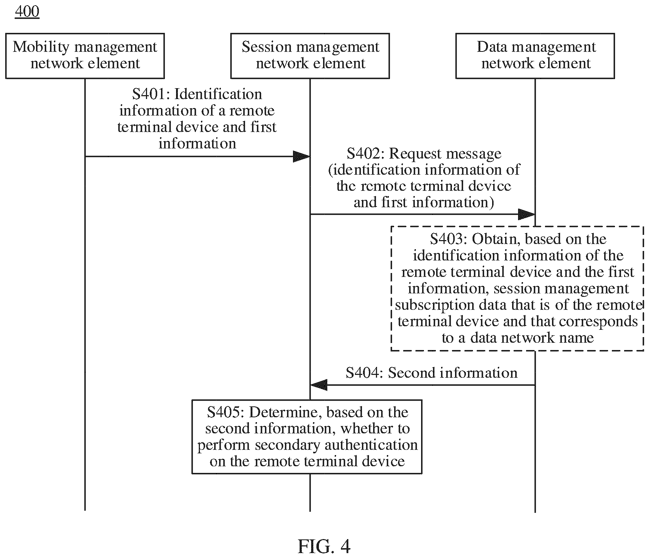

FIG. 4 is an example flowchart of a method 400 according to an embodiment of this application. The method 400 may be applied to the network architecture provided in (a) in FIG. 1 or (b) in FIG. 1. The following describes the method 400 by using an example with reference to steps in FIG. 4.

S401: A mobility management network element sends identification information of a remote terminal device and first information to a session management network element. Accordingly, the session management network element receives the identification information of the remote terminal device and the first information from the mobility management network element.

For example, the mobility management network element obtains the identification information of the remote terminal device and the first information, and then sends the identification information of the remote terminal device and the first information to the session management network element.

It should be understood that, in this embodiment, the mobility management network element is a network element that provides a service for a relay terminal device, and the relay terminal device provides a relay service for the remote terminal device. The identification information of the remote terminal device is information that identifies an identity of the remote terminal device, and the information may be, for example, a subscription concealed identifier or a subscription permanent identifier of the remote terminal device. The first information is for determining a data network corresponding to the remote terminal device, and the first information includes at least one of a relay service code of the remote terminal device, a name of the data network corresponding to the remote terminal device, and a proximity-based services relay user key identifier. In addition, for convenience, in subsequent embodiments, the name of the data network corresponding to the remote terminal device is denoted as a data network name.

The following describes, by using examples, specific implementations in which the mobility management network element obtains and sends the identification information of the remote terminal device and the first information.

In a first implementation, the identification information of the remote terminal device is the subscription concealed identifier of the remote terminal device, and the first information is the relay service code corresponding to the remote terminal device. Specifically, the remote terminal device generates the subscription concealed identifier, and then sends the subscription concealed identifier to the relay terminal device. For example, after generating the identification information, the remote terminal device sends the subscription concealed identifier to the relay terminal device via a direct communication request (Direct Communication Request) message or a direct security mode complete (Direct Security Mode Complete) message. After receiving the subscription concealed identifier, the relay terminal device sends, to the mobility management network element, the subscription concealed identifier and the relay service code corresponding to the remote terminal device, where the relay service code corresponding to the remote terminal device is a relay service code used when a connection is established between the relay terminal device and the remote terminal device. Then, the mobility management network element sends the subscription concealed identifier and the relay service code to the session management network element. In an implementation, the subscription concealed identifier and the relay service code may be carried in report information of the remote terminal device. That is, the relay terminal device sends the report information of the remote terminal device to the mobility management network element, where the report information includes the subscription concealed identifier and the relay service code. After receiving the report information, the mobility management network element sends the report information to the session management network element. In another implementation, the subscription concealed identifier may be carried in report information of the remote terminal device, and the relay service code may be carried outside the report information of the remote terminal device. That is, a non-access stratum (non-access stratum, NAS) message sent by the relay terminal device to the mobility management network element includes the report information of the remote terminal device and the relay service code, and the report information includes the subscription concealed identifier. After receiving the report information, the mobility management network element sends the report information and the relay service code to the session management network element. A specific transmission manner is not limited in this embodiment.

In a second implementation, the identification information of the remote terminal device is the subscription concealed identifier of the remote terminal device, and the first information is the data network name corresponding to the remote terminal device. Specifically, the remote terminal device generates the subscription concealed identifier, and then sends the subscription concealed identifier to the relay terminal device via a direct communication request (Direct Communication Request) message or a direct security mode complete (Direct Security Mode Complete) message. After receiving the subscription concealed identifier, the relay terminal device determines, based on the relay service code corresponding to the remote terminal device, the data network name corresponding to the remote terminal device, where the data network name corresponding to the remote terminal device is a data network name of a data network accessed by the remote terminal device. For example, when a session parameter corresponding to the relay service code includes the data network name, the relay terminal device obtains the data network name from the parameter. For another example, when a session parameter corresponding to the relay service code does not include the data network name but includes single network slice selection assistance information, the relay terminal device determines the data network name based on the single network slice selection assistance information. After obtaining the data network name, the relay terminal device sends the subscription concealed identifier and the data network name to the mobility management network element. In an implementation, the subscription concealed identifier and the data network name may be carried in report information of the remote terminal device. That is, the relay terminal device sends the report information of the remote terminal device to the mobility management network element, where the report information includes the subscription concealed identifier and the data network name. After receiving the report information, the mobility management network element sends the report information to the session management network element. In another implementation, the subscription concealed identifier may be carried in report information of the remote terminal device, and the data network name may be carried outside the report information of the remote terminal device. That is, a NAS message sent by the relay terminal device to the mobility management network element includes the report information of the remote terminal device and the data network name, and the report information includes the subscription concealed identifier. After receiving the report information, the mobility management network element sends the report information and the data network name to the session management network element. A specific transmission manner is not limited in this embodiment.

In a third implementation, the identification information of the remote terminal device is the proximity-based services relay user key identifier of the remote terminal device, and the first information is the relay service code corresponding to the remote terminal device. Specifically, after obtaining the proximity-based services relay user key identifier from a network side, the relay terminal device sends, to the mobility management network element, the proximity-based services relay user key identifier and the relay service code corresponding to the remote terminal device. Then, the mobility management network element sends the proximity-based services relay user key identifier and the relay service code to the session management network element. In an implementation, the proximity-based services relay user key identifier and the relay service code may be carried in report information of the remote terminal device. That is, the relay terminal device sends the report information of the remote terminal device to the mobility management network element, where the report information includes the proximity-based services relay user key identifier and the relay service code. After receiving the report information, the mobility management network element sends the report information to the session management network element. In another implementation, the proximity-based services relay user key identifier may be carried in report information of the remote terminal device, and the relay service code may be carried outside the report information of the remote terminal device. That is, a NAS message sent by the relay terminal device to the mobility management network element includes the report information of the remote terminal device and the relay service code, and the report information includes the proximity-based services relay user key identifier. After receiving the report information, the mobility management network element sends the report information and the relay service code to the session management network element. In still another implementation, both the proximity-based services relay user key identifier and the relay service code are carried outside report information of the remote terminal device. That is, a NAS message sent by the relay terminal device to the mobility management network element includes the relay service code, the proximity-based services relay user key identifier, and the report information of the remote terminal device. After receiving these pieces of information, the mobility management network element sends both the proximity-based services relay user key identifier and the report information of the remote terminal device to the session management network element. In this case, a user info part in the report information of the remote terminal device may be set to any value. A specific transmission manner is not limited in this embodiment.

In a fourth implementation, the identification information of the remote terminal device is the proximity-based services relay user key identifier of the remote terminal device, and the first information is the data network name corresponding to the remote terminal device. Specifically, after the relay terminal device obtains the proximity-based services relay user key identifier from a network side, the relay terminal device obtains the data network name, and then sends the proximity-based services relay user key identifier and the data network name to the mobility management network element. For manners in which the relay terminal device obtains the data network name, refer to the examples in the second implementation. Details are not described herein again. Further, the mobility management network element sends the proximity-based services relay user key identifier and the data network name to the session management network element. In an implementation, the proximity-based services relay user key identifier and the data network name may be carried in report information of the remote terminal device. That is, the relay terminal device sends the report information of the remote terminal device to the mobility management network element, where the report information includes the proximity-based services relay user key identifier and the data network name. After receiving the report information, the mobility management network element sends the report information to the session management network element. In another implementation, the proximity-based services relay user key identifier may be carried in report information of the remote terminal device, and the data network name may be carried outside the report information of the remote terminal device. That is, a NAS message sent by the relay terminal device to the mobility management network element includes the report information of the remote terminal device and the data network name, and the report information includes the proximity-based services relay user key identifier. After receiving the report information, the mobility management network element sends the report information and the data network name to the session management network element. In still another implementation, both the proximity-based services relay user key identifier and the data network name are carried outside report information of the remote terminal device. That is, a NAS message sent by the relay terminal device to the mobility management network element includes the report information of the remote terminal device, the proximity-based services relay user key identifier, and the data network name. After receiving these pieces of information, the mobility management network element sends all of the proximity-based services relay user key identifier, the data network name, and the report information of the remote terminal device to the session management network element. In this case, a user info part in the report information of the remote terminal device may be set to any value. A specific transmission manner is not limited in this embodiment.

In a fifth implementation, the identification information of the remote terminal device is the subscription permanent identifier of the remote terminal device, and the first information is the data network name of the remote terminal device. Specifically, the relay terminal device obtains the data network name corresponding to the remote terminal device. For specific implementations, refer to the examples in the second implementation. Details are not described herein again. Then, the relay terminal device may send a transaction identifier and the data network name to the mobility management network element, where the transaction identifier is an identifier that uniquely identifies, between the relay terminal device and the mobility management network element, a connection corresponding to the remote terminal device. After receiving the transaction identifier and the data network name, the mobility management network element determines the subscription permanent identifier of the remote terminal device based on the transaction identifier and a prestored correspondence between the transaction identifier and the subscription permanent identifier. Then, the mobility management network element sends the subscription permanent identifier and the data network name to the session management network element. In an implementation, the data network name may be carried in report information of the remote terminal device. That is, the relay terminal device sends the transaction identifier and the report information of the remote terminal device to the mobility management network element, where the report information includes the data network name. After determining the subscription permanent identifier based on the transaction identifier, the mobility management network element sends the subscription permanent identifier and the report information to the session management network element. In another implementation, the data network name may be carried outside report information of the remote terminal device. That is, a NAS message sent by the relay terminal device to the mobility management network element includes the report information of the remote terminal device and the data network name. After determining the subscription permanent identifier based on the transaction identifier, the mobility management network element sends the report information, the subscription permanent identifier, and the data network name to the session management network element. A specific transmission manner is not limited in this embodiment.

In a sixth implementation, the identification information of the remote terminal device is the subscription permanent identifier of the remote terminal device, and the first information is the relay service code corresponding to the remote terminal device. Specifically, the relay terminal device sends a transaction identifier and the relay service code to the mobility management network element. After receiving the transaction identifier and the relay service code, the mobility management network element determines the subscription permanent identifier of the remote terminal device based on the transaction identifier and a prestored correspondence between the transaction identifier and the subscription permanent identifier. Then, the mobility management network element sends the subscription permanent identifier and the relay service code to the session management network element. In an implementation, the relay service code may be carried in report information of the remote terminal device. That is, the relay terminal device sends the transaction identifier and the report information of the remote terminal device to the mobility management network element, where the report information includes the relay service code. After determining the subscription permanent identifier based on the transaction identifier, the mobility management network element sends the subscription permanent identifier and the report information to the session management network element. In another implementation, the relay service code may be carried outside report information of the remote terminal device. That is, a NAS message sent by the relay terminal device to the mobility management network element includes the report information of the remote terminal device and the relay service code. After determining the subscription permanent identifier based on the transaction identifier, the mobility management network element sends the report information, the subscription permanent identifier, and the relay service code to the session management network element. A specific transmission manner is not limited in this embodiment.

In a seventh implementation, the identification information of the remote terminal device is the subscription permanent identifier of the remote terminal device, and the first information is the data network name corresponding to the remote terminal device. Specifically, the relay terminal device sends a transaction identifier to the mobility management network element. After receiving the transaction identifier, the mobility management network element determines, based on the transaction identifier and a prestored correspondence between the transaction identifier, the subscription permanent identifier, and the data network name, the subscription permanent identifier and the data network name that are of the remote terminal device. Then, the mobility management network element sends the subscription permanent identifier and the data network name to the session management network element.

In an eighth implementation, the identification information of the remote terminal device is the subscription permanent identifier of the remote terminal device, and the first information is the relay service code corresponding to the remote terminal device. Specifically, the relay terminal device sends a transaction identifier to the mobility management network element. After receiving the transaction identifier, the mobility management network element determines, based on the transaction identifier and a prestored correspondence between the transaction identifier, the subscription permanent identifier, and the relay service code, the subscription permanent identifier and the relay service code that are of the remote terminal device. Then, the mobility management network element sends the subscription permanent identifier and the relay service code to the session management network element.

In a ninth implementation, the identification information of the remote terminal device is the subscription permanent identifier of the remote terminal device, and the first information is the data network name corresponding to the remote terminal device. Specifically, the relay terminal device sends a transaction identifier and the proximity-based services relay user key identifier to the mobility management network element. After receiving the transaction identifier, the mobility management network element determines the data network name of the remote terminal device based on the transaction identifier and a prestored correspondence between the transaction identifier and the data network name. The mobility management network element further needs to obtain the subscription permanent identifier of the remote terminal device from a proximity anchor network element by using the proximity-based services relay user key identifier. Then, the mobility management network element sends the subscription permanent identifier and the data network name to the session management network element. In an implementation, the proximity-based services relay user key identifier may be carried in report information of the remote terminal device. That is, the relay terminal device sends the transaction identifier and the report information of the remote terminal device to the mobility management network element, where the report information includes the proximity-based services relay user key identifier. After obtaining the subscription permanent identifier and the data network name, the mobility management network element sends the subscription permanent identifier, the data network name, and the report information to the session management network element. In another implementation, the proximity-based services relay user key identifier may be carried outside report information of the remote terminal device. That is, a NAS message sent by the relay terminal device to the mobility management network element includes the report information of the remote terminal device and the proximity-based services relay user key identifier. After determining the subscription permanent identifier and the data network name, the mobility management network element sends the report information, the subscription permanent identifier, and a serving network name to the session management network element. A specific transmission manner is not limited in this embodiment.

In a tenth implementation, the identification information of the remote terminal device is the subscription permanent identifier of the remote terminal device, and the first information is the data network name corresponding to the remote terminal device. Specifically, the relay terminal obtains the proximity-based services relay user key identifier from a network side. The relay terminal device further needs to obtain the data network name. For manners in which the relay terminal device obtains the data network name, refer to the examples in the second implementation. Details are not described herein again. Then, the relay terminal device sends the proximity-based services relay user key identifier and the data network name to the mobility management network element. After the mobility management network element receives the proximity-based services relay user key identifier, the mobility management network element further needs to obtain the subscription permanent identifier of a user from a proximity anchor network element by using the proximity-based services relay user key identifier. Then, the mobility management network element sends the subscription permanent identifier and the data network name to the session management network element. In an implementation, both the proximity-based services relay user key identifier and the data network name are carried outside report information of the remote terminal device. That is, a NAS message sent by the relay terminal device to the mobility management network element includes the proximity-based services relay user key identifier, the data network name, and the report information of the remote terminal device. After the mobility management network element receives these pieces of information, the mobility management network element further needs to obtain the subscription permanent identifier of the user from the proximity anchor network element by using the proximity-based services relay user key identifier, and then sends all of the subscription permanent identifier, the data network name, and the report information of the remote terminal device to the session management network element. In this case, a user info part in the report information of the remote terminal device may be set to any value. A specific transmission manner is not limited in this embodiment.

S402: The session management network element sends a request message to a data management network element, where the request message includes the identification information of the remote terminal device and the first information. Accordingly, the data management network element receives the request message from the session management network element.

For example, after receiving the identification information of the remote terminal device and the first information from the mobility management network element, the session management network element sends the request message to the data management network element, and includes the identification information of the remote terminal device and the first information in the request message. The request message is for requesting second information, and the second information is for determining whether to perform secondary authentication on the remote terminal device.

It should be noted that a method for obtaining the identification information of the remote terminal device by the session management network element varies with a location at which the identification information of the terminal device appears in the message. For example, when the identification information of the terminal device is in the report information of the remote terminal device, the identification information of the terminal device may be obtained from the report information of the remote terminal device; or when the identification information of the terminal device is outside the report information of the remote terminal device, the session management network element may directly obtain the identification information of the terminal device. In this case, the session management network element may not view user info in the report information of the remote terminal device. Accordingly, the user info part in the report information of the remote terminal device may be filled with the any value by the relay terminal device. For example, the any value may be a random value that has no actual meaning. For another example, the user info part in the report information of the remote terminal device may be filled with the proximity-based services relay user key identifier. Filled content and a filling manner are not limited in this embodiment.

Optionally, in S403, the data management network element obtains, based on the identification information of the remote terminal device and the first information, session management subscription data that is of the remote terminal device and that corresponds to the data network name.

For example, after receiving the request message from the session management network element, the data management network element determines, based on the identification information of the remote terminal device and the first information that are carried in the request message, the subscription permanent identifier and the data network name that are of the remote terminal device. It should be noted that, if the identification information of the remote terminal device in the request message is the subscription concealed identifier, the data management network element obtains the subscription permanent identifier by decrypting the subscription concealed identifier. If the identification information of the remote terminal device in the request message is the proximity-based services relay user key identifier, the data management network element determines the subscription permanent identifier based on the proximity-based services relay user key identifier. For example, the data management network element sends the proximity-based services relay user key identifier to a proximity-based services application function network element, to request the subscription permanent identifier corresponding to the proximity-based services relay user key identifier, and the proximity-based services application function network element sends the subscription permanent identifier to the data management network element based on the request of the data management network element. If the first information in the request message is the relay service code, the data management network element determines the corresponding data network name based on the relay service code. For example, the data management network element determines, based on a locally stored correspondence between the relay service code and the data network name, the data network name corresponding to the relay service code. For another example, the data management network element requests, from another network element or functional entity (for example, a policy control network element or a proximity-based services application server), the data network name corresponding to the relay service code.

It should be noted that, after the data management network element determines the subscription permanent identifier and the data network name that are of the remote terminal device, if the data management network element finds that there is a secondary authentication result corresponding to the subscription permanent identifier and the data network name that are of the remote terminal device, the data management network element may not perform S403.

S404: The data management network element sends the second information to the session management network element. Accordingly, the session management network element receives the second information from the data management network element.

For example, the second information includes at least one of the following information: the session management subscription data that is of the remote terminal device and that corresponds to the data network, first indication information, and second indication information, where the first indication information indicates whether secondary authentication needs to be performed on the remote terminal device, and the second indication information indicates whether a previous time of secondary authentication on the remote terminal device succeeds.

In a possible implementation (denoted as a manner a), after obtaining the session management subscription data that is of the remote terminal device and that corresponds to the data network, the data management network element sends the session management subscription data to the session management network element.

In another possible implementation (denoted as a manner b), after obtaining the session management subscription data that is of the remote terminal device and that corresponds to the data network, the data management network element determines, based on the session management subscription data, whether secondary authentication needs to be performed on the remote terminal device. Then, the data management network element sends the first indication information to the session management network element, to indicate whether secondary authentication needs to be performed on the remote terminal device. Optionally, the data management network element may further send the session management subscription data to the session management network element.

In still another possible implementation (denoted as a manner c), if the data management network element finds that there is a secondary authentication result corresponding to the subscription permanent identifier and the data network name, the data management network element sends the second indication information to the session management network element based on the secondary authentication result, to indicate whether the previous time of secondary authentication on the remote terminal device succeeds. In this implementation, S403 may not be performed, or S403 may be performed. If S403 is performed, the data management network element may further send the session management subscription data and/or the first indication information to the session management network element.

In still another possible implementation (denoted as a manner d), if the data management network element finds that there is a secondary authentication result corresponding to the subscription permanent identifier and the data network name, the data management network element may determine, based on a result of the previous time of secondary authentication corresponding to the remote terminal device, whether secondary authentication needs to be performed on the remote terminal device. For example, when the previous time of secondary authentication on the remote terminal device succeeds, the data management network element determines that the secondary authentication does not need to be performed on the remote terminal device; or if the previous time of secondary authentication on the remote terminal device fails, the data management network element determines that secondary authentication needs to be performed on the remote terminal device. In this case, the data management network element sends the first indication information to the session management network element, to indicate whether secondary authentication needs to be performed on the remote terminal device. In this implementation, S403 may not be performed, or S403 may be performed. If S403 is performed, the data management network element may further send the session management subscription data and/or the second indication information to the session management network element.

S405: The session management network element determines, based on the second information, whether to perform secondary authentication on the remote terminal device.

For example, after receiving the second information from the data management network element, the session management network element determines, based on the second information, whether secondary authentication needs to be performed on the remote terminal device. The following provides detailed descriptions with reference to different examples.

In correspondence to the foregoing manner a, the session management network element receives, from the data management network element, the session management subscription data that is of the remote terminal device and that corresponds to the data network. Then, the session management network element determines, based on the session management subscription data, whether secondary authentication needs to be performed on the remote terminal device.

In correspondence to the foregoing manner b or d, the session management network element receives the first indication information from the data management network element. The session management network element determines, based on the first indication information, whether secondary authentication needs to be performed on the remote terminal device. For example, when the first indication information indicates that secondary authentication needs to be performed on the remote terminal device, the session management network element determines to perform secondary authentication on the remote terminal device (in other words, determines to initiate a secondary authentication procedure). When the first indication information indicates that the secondary authentication does not need to be performed on the remote terminal device, the session management network element determines not to perform secondary authentication on the remote terminal device (in other words, determines not to initiate a secondary authentication procedure).

In correspondence to the foregoing manner c, the session management network element receives the second indication information from the data management network element. The session management network element determines, based on the second indication information, whether secondary authentication needs to be performed on the remote terminal device. For example, when the second indication information indicates that the previous time of secondary authentication on the remote terminal device succeeds, the session management network element determines that the secondary authentication does not need to be performed on the remote terminal device. When the second indication information indicates that the previous time of secondary authentication on the remote terminal device fails, the session management network element determines to perform secondary authentication on the remote terminal device.

When the session management network element determines to perform secondary authentication on the remote terminal device, the session management network element triggers the secondary authentication procedure on the remote terminal device.

According to the foregoing solution, the session management network element may determine whether secondary authentication needs to be performed on the remote terminal device in a proximity-based services scenario.

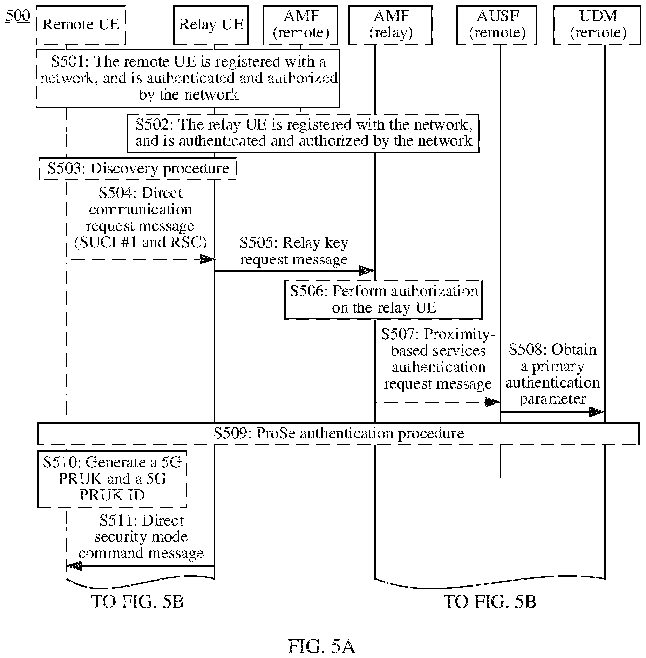

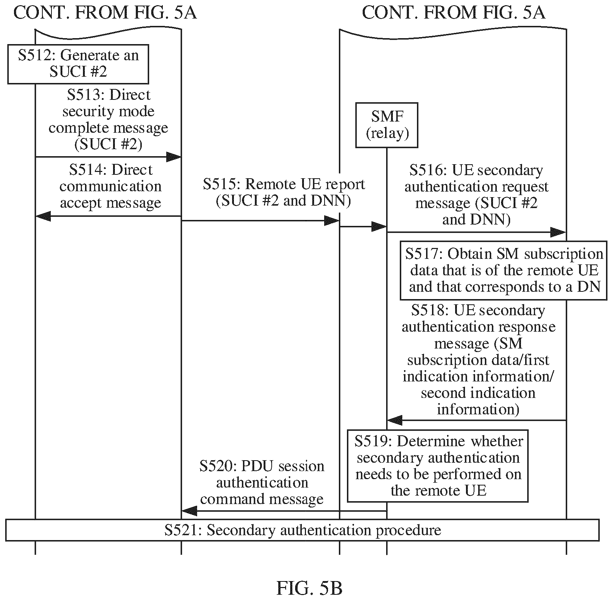

FIG. 5A and FIG. 5B are an example flowchart of a method 500 according to an embodiment of this application. In the method 500, a remote UE sends a newly generated SUCI (namely, an SUCI #2) to a relay LTE via a direct security mode complete message. Then, the relay UE obtains a DNN corresponding to the relay UE, and then sends the DNN and the SUCI #2 to an SMF, so that the SMF obtains, from a UDM, parameter information for determining whether to perform secondary authentication. The following describes the method 500 by using an example with reference to steps in FIG. 5A and FIG. 5B.

It should be understood that S501 to S511 are similar to S201 to S219 in the method 200, where S509 corresponds to S209 to S214 in the method 200, S510 corresponds to S215b in the method 200, and steps corresponding to S215a and S216 to S218 in the method 200 have been omitted in the method 500. For a specific process, refer to the descriptions in the method 300. Details are not described herein again.

It should be further understood that, for ease of description, an SUCI that the remote LTE includes in a direct communication request message in S504 is denoted as an SUCI #1.

S512: The remote UE generates the SUCI #2.

For example, after receiving a direct security mode command (Direct Security Mode Command) message from the relay LTE (that is, S511), the remote LTE generates the SUCI #2. In other words, before replying to the relay UE with the direct security mode complete (Direct Security Mode Complete) message, the remote UE generates the SUCI #2. The SUCI #2 is generated by the remote UE based on an SUPI. A specific manner is not limited in this application.

S513: The remote UE sends the direct security mode complete message to the relay LTE. Accordingly, the relay LTE receives the direct security mode complete message from the remote LTE.

For example, after generating the SUCI #2, the remote UE sends the direct security mode complete message to the relay LTE, and includes the SUCI #2 in the direct security mode complete message.

S514: The relay UE sends a direct communication accept (Direct communication Accept) message to the remote UE. Accordingly, the remote UE receives the direct communication accept message from the remote UE.

S515: The relay UE sends a remote UE report (Remote UE Report) to the SMF via an AMF. Accordingly, the SMF receives the remote UE report from the relay UE via the AMF.

For example, the remote UE report includes the SUCI #2. In other words, a remote user ID field in the remote UE report is filled with the SUCI #2.

The relay UE further sends, to the AMF, the DNN corresponding to the remote UE. The DNN may be obtained by the relay UE from the remote UE at any moment before S515. For example, the remote UE includes, in S504 or S513, the DNN corresponding to the remote UE, and the relay UE receives and stores the DNN. Alternatively, the DNN may be determined by the relay UE based on an RSC. For example, before S515, the relay UE determines information about the DNN based on a PDU session parameter corresponding to an RSC used when establishing a connection to the remote UE. When the PDU session parameter corresponding to the RSC includes the DNN, the relay UE may directly obtain the DNN from the PDU session parameter. If the PDU session parameter does not include the DNN, the relay LTE may determine the information about the DNN based on the PDU session parameter. For example, when the PDU session parameter does not include the DNN but includes information about S-NSSAI, the relay UE may obtain the DNN based on the S-NSSAI. Optionally, the PDU session parameter may further include S-NSSI. It should be understood that, when the S-NSSAI is a necessary parameter for determining whether the secondary authentication is needed, and cannot be obtained from another location, the PDU session parameter needs to include the S-NSSAI.

It should be noted that the DNN may be carried in the remote UE report (that is, the DNN is used as a part of the remote LTE), or may not be carried in the remote LTE report (that is, the DNN is used as a separate information element). This is not limited in this application.

S516: The SMF sends a UE secondary authentication request (UE Secondary authentication request) message to the UDM. Accordingly, the UDM receives the UE secondary authentication request message from the SMF.

For example, the secondary authentication request message is for requesting a parameter related to the secondary authentication from the UDM. The parameter related to the secondary authentication herein may be understood as a parameter for determining whether to perform secondary authentication on the remote UE. The secondary authentication request message may alternatively have another name. For example, the secondary authentication request message may also be referred to as a subscription information request message. This is not limited in this application. The secondary authentication request message includes the SUCI #2 and the DNN.

S517: The UDM obtains SM subscription data that is of the remote UE and that corresponds to a DN.

For example, after receiving the secondary authentication request message from the SMF, the UDM obtains, based on the SUCI #2 and the DNN that are carried in the secondary authentication request message, the SM subscription data that is of the remote UE and that corresponds to the DN.

S518: The UDM sends a UE secondary authentication response (UE Secondary authentication response) message to the SMF. Accordingly, the SMF receives the UE secondary authentication response message from the UDM. The secondary authentication response message is for sending, to the SMF, the determined parameter related to the secondary authentication. A message name is not limited in this embodiment.

For example, the parameter related to the secondary authentication includes one or more of the following: the SM subscription data that is of the remote LTE and that corresponds to the DN, first indication information, and second indication information. The first indication information indicates whether secondary authentication needs to be performed on the remote UE. The second indication information indicates whether a previous time of secondary authentication on the remote UE succeeds. In other words, the second indication information indicates a result of the previous time of secondary authentication on the remote UE. The second indication information may also be referred to as a secondary authentication result (secondary result). The following provides detailed descriptions with reference to different examples.

In a first possible implementation, after obtaining the SM subscription data that is of the remote UE and that corresponds to the DN, the UDM sends the UE secondary authentication response message to the SMF, and includes the SM subscription data in the UE secondary authentication response message.

In a second possible implementation, after obtaining the SM subscription data that is of the remote LTE and that corresponds to the DN, the UDM determines, based on the SM subscription data, whether secondary authentication needs to be performed on the remote UE. Then, the UDM sends the UE secondary authentication response message to the SMF, and includes the first indication information in the UE secondary authentication response message, to indicate whether secondary authentication needs to be performed on the remote UE. Optionally, the UE secondary authentication response message may further carry the SM subscription data.

In a third possible implementation, if the UDM finds that there is a secondary authentication result of the DNN of the remote UE, the UDM sends the UE secondary authentication response message to the SMF based on the secondary authentication result, and includes the second indication information in the UE secondary authentication response message, to indicate whether the previous time of secondary authentication on the remote UE succeeds. Optionally, the UE secondary authentication response message may further carry the SM subscription data and/or the first indication information.

In a fourth possible implementation, if the UDM finds that there is a secondary authentication result corresponding to the DNN of the remote UE, the UDM may determine, based on the result of the previous time of secondary authentication, whether secondary authentication needs to be performed on the remote UE. For example, when the previous time of secondary authentication on the remote UE succeeds, the UDM determines that the secondary authentication does not need to be performed on the remote UE; or if the previous time of secondary authentication on the remote UE fails, the UDM determines that secondary authentication needs to be performed on the remote UE. In this case, the UDM sends the UE secondary authentication response message to the SMF, and includes the first indication information in the UE secondary authentication response message, to indicate whether secondary authentication needs to be performed on the remote UE. Optionally, the UE secondary authentication response message may further carry the SM subscription data and/or the second indication information.

S519: The SMF determines whether secondary authentication needs to be performed on the remote UE.

For example, after receiving the LTE secondary authentication response message from the UDM, the SMF determines, based on information carried in the LTE secondary authentication response message, whether secondary authentication needs to be performed on the remote UE. The following provides detailed descriptions with reference to different examples.

In correspondence to the foregoing first possible implementation, the SMF receives the UE secondary authentication response message from the UDM, where the secondary authentication response message includes the SM subscription data that is of the remote UE and that corresponds to the DN. Then, the SMF determines, based on the SM subscription data, whether secondary authentication needs to be performed on the remote UE.

In correspondence to the second or the fourth possible implementation, the SMF receives the UE secondary authentication response message from the UDM, where the secondary authentication response message includes the first indication information. The SMF determines, based on the first indication information, whether secondary authentication needs to be performed on the remote UE. For example, when the first indication information indicates that secondary authentication needs to be performed on the remote UE, the SMF determines to initiate a secondary authentication procedure. When the first indication information indicates that the secondary authentication does not need to be performed on the remote UE, the SMF determines not to initiate a secondary authentication procedure.

In correspondence to the foregoing third possible implementation, the SMF receives a UE secondary authentication request response from the UDM, where the secondary authentication response message includes the second indication information. The SMF determines, based on the second indication information, whether secondary authentication needs to be performed on the remote UE. For example, when the second indication information indicates that the previous time of secondary authentication on the remote UE succeeds, the SMF determines that the secondary authentication does not need to be performed on the remote UE; or when the second indication information indicates that the previous time of secondary authentication on the remote UE fails, the SMF determines that the secondary authentication needs (or does not need) to be performed on the remote UE. Optionally, if the UE secondary authentication request message further carries the SM subscription data that is of the remote UE and that corresponds to the DN, or the first indication information, the SMF may alternatively determine, with reference to these pieces of information, whether secondary authentication needs to be performed on the remote UE.

S520: The SMF sends a PDU session authentication command message to the relay UE, where the PDU session authentication command message is for starting to perform secondary authentication on the remote UE.

S521: Perform the secondary authentication procedure on the remote UE.

For example, if the SMF determines that secondary authentication needs to be performed on the remote UE, the SMF sends the PDU session authentication command message to the relay UE, to trigger the secondary authentication procedure on the remote LTE. For a specific process, refer to S311 to S320 in the method 400. Details are not described herein again.

It should be noted that the foregoing solution is described by using an example in which the relay LTE provides the SUCI #2 and the DNN for the AMF in S515. However, in another implementation, the DNN may alternatively be replaced with the RSC. In other words, the relay LTE sends the remote LTE report to the SMF in S515, where the remote UE report includes the SUCI #2 and the RSC. The RSC may alternatively be outside the remote UE report. The RSC may be obtained by the relay UE in a discovery (Discovery) procedure in S503, may be obtained in S504, or may be obtained in S513 (in this case, the remote UE needs to include the RSC in S513). This is not limited in this application. In this implementation, the SMF includes the SUCI #2 and the RSC in the secondary authentication request message in S516. After receiving the secondary authentication request message, the UDM determines the DNN based on the RSC. The UDM may determine the DNN based on a locally stored correspondence between the RSC and the DNN, or request, from another network element or functional entity such as a PCF or a ProSe application server, the DNN corresponding to the RSC. Further, the UDM determines, based on the SUPI and the DNN, the SM subscription data that is of the remote UE and that corresponds to the DN of the remote UE. A subsequent solution is similar to the foregoing example. Details are not described again.

It should be further noted that the foregoing solution is described by using an example in which the SUCI #2 is used as an identifier of the remote LTE. However, in another implementation, the SUCI #2 may alternatively be replaced with a 5G PRUK ID. In other words, the SUCI #2 in S513 to S516 in the foregoing solution may be replaced with the 5G PRUK ID. However, the 5GPRUK ID may be carried outside the remote UE report. That is, content of the remote UE report is not changed. In this implementation, the remote UE may not perform S512. In addition, after receiving the secondary authentication request message from the SMF, the UDM determines the SUPI of the remote UE based on the 5G PRUK ID. For example, the UDM sends a request message to a PrAF, where the request message includes the 5G PRUK ID, and the request message is for requesting the SUPI corresponding to the 5G PRUK ID. The PrAF returns the SUPI to the UDM based on the request of the UDM. Further, the UDM determines, based on the SUPI and the DNN, the SM subscription data that is of the remote UE and that corresponds to the DN of the remote UE. A subsequent solution is similar to the foregoing example. Details are not described again. It should be further noted that the foregoing solution is described by using an example in which the SMF receives the SUCI #2 and the DNN from the relay UE. However, in another implementation, the SMF may further receive the foregoing information from another network element or device. For example, before S515, the SMF receives, from an AUSF or the AMF, the DNN corresponding to the remote UE, and the SMF may prestore the DNN. After receiving the SUCI #2 in S515, the SMF requests, from the UDM by using the DNN and the SUCI #2, a secondary authentication parameter for determining whether to perform secondary authentication. Alternatively, before S515, the SMF receives the SUPI and the DNN that are of the remote UE from an AUSF or the AMF in advance. After receiving the remote LTE report, the SMF requests, from the UDM by using the DNN and the SUPI, a secondary authentication parameter for determining whether to perform secondary authentication.

It should be further noted that the foregoing solution is described by using an example in which the SMF simultaneously receives the SUCI #2 and the DNN (or the SUCI #2 and the RSC). However, in another implementation, the SMF may alternatively receive the SUCI #2 and the DNN (or the SUCI #2 and the RSC) on different occasions. This is not limited in this application.

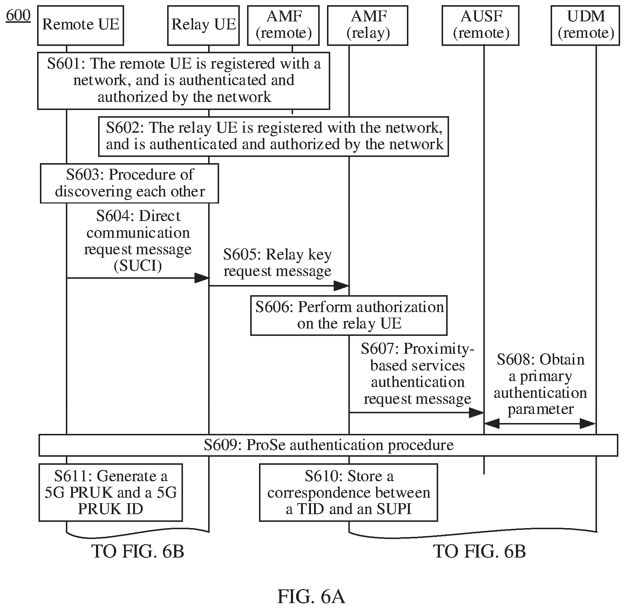

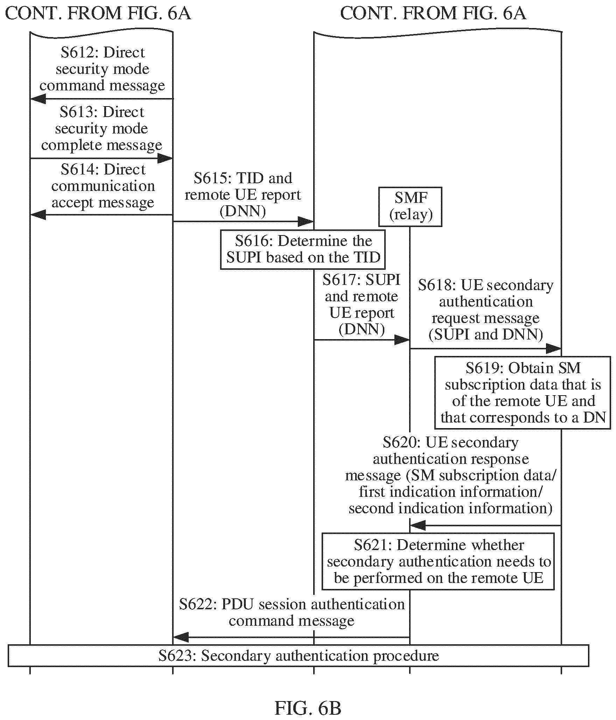

FIG. 6A and FIG. 6B are an example flowchart of a method 600 according to an embodiment of this application. In the method 600, an AMF prestores a correspondence between a TID and an SUPI. After a relay UE provides the TID and a DNN for the AMF, the AMF determines the SUPI based on the TID and the correspondence, and then the AMF sends the SUPI and the DNN to an SMF, so that the SMF obtains, from a UDM, parameter information for determining whether to perform secondary authentication. The following describes the method 600 by using an example with reference to steps in FIG. 6A and FIG. 6B.

It should be understood that S601 to S609 and S611 to S614 are similar to S201 to S222 in the method 200, where S609 corresponds to S209 to S214 in the method 200, and steps corresponding to S215a, S216 to S218, and S220 in the method 200 have been omitted in the method 600. For a specific process, refer to the descriptions in the method 200. Details are not described herein again.

S610: The AMF stores the correspondence between the TID and the SUPI.

For example, the AMF receives the SUPI of a remote UE, and stores the correspondence between the SUPI and the transaction identifier (transaction identifier, TID). The TID may be allocated by the relay UE and sent to the AMF in S605, and the TID uniquely identifies, between the relay UE and the AMF, a connection corresponding to the remote UE. The SUPI may be sent to the AMF via an AUSF. For example, the AUSF obtains, from the UDM, the SUPI corresponding to the remote UE (for example, the UDM sends the SUPI of the remote UE to the AUSF in S608), and then the AUSF sends the SUPI of the remote UE to the AMF (for example, the SUPI of the remote UE is sent to the AMF in S609). After receiving the SUPI of the remote UE, the AMF stores the correspondence between the SUPI and the TID.

S611 to S614 are similar to S315b, S319, S321, and S322 in the method 300. Details are not described herein again.

S615: The relay UE sends the TID, the DNN, and a remote UE report to the AMF. Accordingly, the AMF receives the TID, the DNN, and the remote LTE report from the relay LTE.

For example, the relay UE sends the TID and the remote UE report (Remote UE Report) to the AMF. A format of a message carrying the TID and the remote UE report may be a NAS message, or may be another format. For example, the format may be: the TID and a NAS message (SM container (remote UE report (remote user ID, IP info))), or a NAS message (TID, SM container (remote UE report (remote user ID, IP info))). That is, the TID may be in the NAS message, or may be outside the NAS message. This is not limited in this application.

The relay UE further sends, to the AMF, the DNN corresponding to the remote UE. The DNN may be carried in the remote UE report. In this case, a format of a message may be: a NAS message (TID, SM container (remote LTE report (remote user ID, IP info, DNN))). Alternatively, the DNN may be carried outside the remote LTE report. In this case, a format of a message may be: a NAS message (TID, DNN, SM container (remote UE report (remote user ID, IP info))), or a NAS message (TID, SM container (DNN, remote UE report (remote user ID, IP info))).

S616: The AMF determines the SUPI based on the TID.

For example, after receiving the TID and the remote UE report from the relay UE, the AMF determines the SUPI based on the TID and the prestored correspondence between the TID and the SUPI.

S617: The AMF sends the SUPI and the remote UE report to the SMF. Accordingly, the SMF receives the SUPI and the remote UE report from the AMF.

For example, after determining the SUPI, the AMF sends the remote UE report and the SUPI to the SMF. It should be understood that the AMF further sends the DNN to the SMF if the DNN is not carried in the remote LTE report.

S618: The SMF sends a UE secondary authentication request (UE Secondary authentication request) message to the UDM. Accordingly, the UDM receives the UE secondary authentication request message from the SMF.

For example, the UE secondary authentication request message includes the SUPI and the DNN that are of the remote UE.

S619: The UDM obtains SM subscription data that is of the remote UE and that corresponds to a DN.

For example, after receiving the LTE secondary authentication request message from the SMF, the UDM obtains, based on the SUPI and the DNN corresponding to the UE, the SM subscription data that is of the remote LTE and that corresponds to the DN of the remote LTE. A specific implementation is similar to S517 in the method 500. Details are not described herein again. However, it should be noted that, in S517 in the method 500, the UDM needs to determine the SUPI based on the SUCI #2 carried in the UE secondary authentication request message; but in S619, the UDM may directly obtain the SUPI from the UE secondary authentication request message.

S620 to S623 are similar to S518 to S521 in the method 500. Details are not described herein again.

It should be noted that the foregoing solution is described by using an example in which the relay UE provides the TID and the DNN for the AMF in S615. However, in another implementation, the DNN may alternatively be replaced with an RSC. In other words, the relay UE provides the TID and the RSC for the AMF in S615. For example, the relay UE sends the TID and the remote UE report to the AMF in S615. The remote UE report may include the RSC (it should be understood that the RSC may alternatively be carried outside the remote UE report, and this is not limited herein). Then, after determining the SUPI based on the TID in S616, the AMF sends the SUPI and the remote UE report to the SMF in S617, where the remote UE report includes the RSC. The UDM may determine the DNN based on a locally stored correspondence between the RSC and the DNN, or request, from another network element or functional entity, the DNN corresponding to the RSC, and then obtain, based on the DNN and the SUPI, the SM subscription data that is of the remote UE and that corresponds to the DN. A subsequent solution is similar to the foregoing example. Details are not described again.

It should be noted that the foregoing solution is described by using an example in which the SMF provides the SUPI and an RSC for the UDM in S618. However, in another implementation, the SMF may alternatively determine, based on an RSC, the DNN corresponding to the remote UE, and then provide the SUPI and the DNN for the UDM in S618. The UDM may directly obtain, based on the SUPI and the DNN, the SM subscription data that is of the remote UE and that corresponds to the DN.

It should be noted that the foregoing solution is described by using an example in which the relay UE provides the TID and the DNN for the AMF in S615. However, in another implementation, the TID may alternatively be replaced with a 5G PRUK ID, or the 5G PRUK ID is additionally carried. In other words, the relay UE provides at least the 5G PRUK ID and the DNN for the AMF in S615. In this case, step S610 may not be performed. For example, the relay UE sends the 5G PRUK ID, the DNN, and the remote UE report to the AMF in S615. Some or all of the 5G PRUK ID and the DNN may be in the remote UE report, or neither of the 5G PRUK ID and the DNN may be in the remote UE report. Then, the AMF further needs to request the SUPI from a PrAF by using the 5G PRUK ID, to obtain the SUPI of the remote UE. The SUPI, the DNN, and the remote UE report are sent to the SMF in S617. A subsequent solution is similar to the foregoing example. Details are not described again.

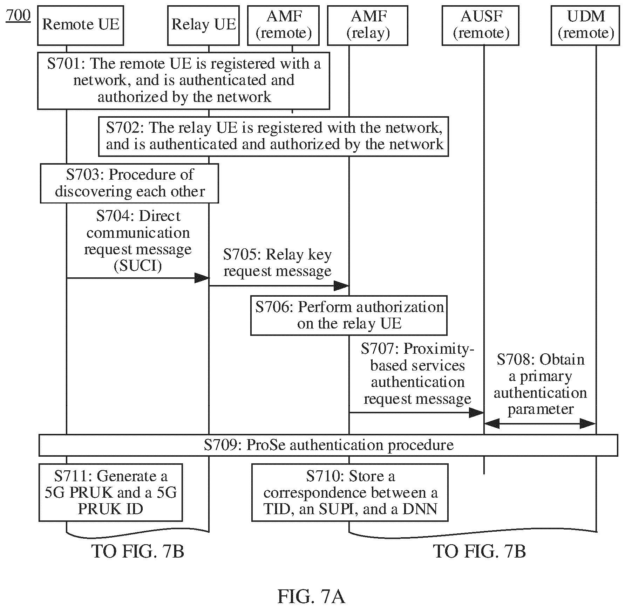

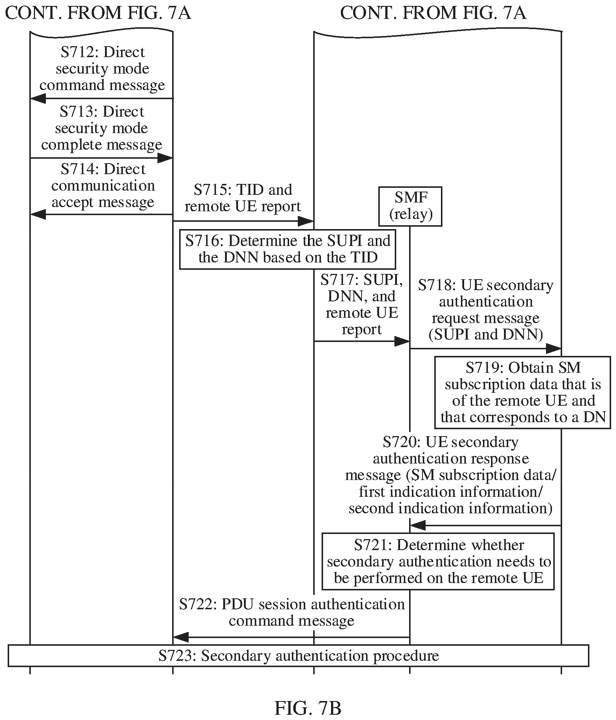

FIG. 7A and FIG. 7B are an example flowchart of a method 700 according to an embodiment of this application. In the method 700, an AMF prestores a correspondence between a TID, an SUPI, and a DNN. After a relay UE provides the TID for the AMF, the AMF determines the SUPI and the DNN based on the TID and the correspondence, and then the AMF sends the SUPI and the DNN to an SMF, so that the SMF obtains, from a UDM, parameter information for determining whether to perform secondary authentication. The following describes the method 700 by using an example with reference to steps in FIG. 7A and FIG. 7B.

It should be understood that S701 to S709 and S711 to S714 are similar to S201 to S222 in the method 200, where S709 corresponds to S209 to S214 in the method 200, and steps corresponding to S215a, S216 to S218 and S220 in the method 200 have been omitted in the method 700. For a specific process, refer to the descriptions in the method 200. Details are not described herein again.

S710: The AMF stores the correspondence between the TID, the SUPI, and the DNN.

For example, the AMF obtains the SUPI of a remote UE and the DNN corresponding to the remote LTE, and then stores the correspondence between the SUPI, the DNN, and the TID. The TID may be allocated by the relay UE and sent to the AMF in S705. The SUPI may be sent to the AMF via an AUSF. For example, the AUSF obtains, from the UDM, the SUPI corresponding to the remote UE (for example, the UDM sends the SUPI of the remote UE to the AUSF in S708), and then the AUSF sends the SUPI of the remote UE to the AMF (for example, the SUPI of the remote UE is sent to the AMF in S709). The DNN may be sent by the remote UE to the relay UE (for example, the remote UE sends the DNN to the relay UE in S704) and then sent by the relay UE to the AMF (for example, the relay UE sends the DNN to the AMF in S705), or may be obtained by the AMF based on an RSC. For example, the AMF determines, based on the RSC corresponding to the remote UE and a locally configured correspondence between the RSC and the DNN, the DNN corresponding to the remote UE. For another example, the AMF requests, from another network element or functional entity by using the RSC corresponding to the remote UE, the DNN corresponding to the RSC. After obtaining the DNN, the SUPI, and the TID, the AMF stores the correspondence between the TID, the SUPI, and the DNN.

S711 to S714 are similar to S315b, S319, S321, and S322 in the method 300. Details are not described herein again.

S715: The relay UE sends the TID and a remote UE report to the AMF. Accordingly, the AMF receives the TID and the remote UE report from the relay UE.

For example, after generating the remote LTE report, the relay LTE sends, to the AMF, the remote UE report and the TID corresponding to the remote UE. A format of a NAS message carrying the TID and the remote UE report may be the NAS message, or may be another format. For example, the format may be: the TID and a NAS message (SM container (remote UE report (remote user ID, IP info))), or a NAS message (TID, SM container (remote UE report (remote user ID, IP info))). That is, the TID may be in the NAS message, or may be outside the NAS message. This is not limited in this application.

S716: The AMF determines the SUPI and the DNN based on the TID.

For example, after receiving, from the relay UE, the TID corresponding to the remote UE, the AMF determines, based on the TID and the correspondence stored in S710, the SUPI and the DNN that correspond to the TID.

S717: The AMF sends the SUPI, the DNN, and the remote UE report to the SMF. Accordingly, the SMF receives the SUPI, the DNN, and the remote UE report from the AMF.

For example, after determining the SUPI and the DNN, the AMF sends the SUPI, the DNN, and the remote UE report to the SMF.

S718 to S723 are similar to S618 to S623 in the method 600. Details are not described herein again.

It should be noted that the foregoing solution is described by using an example in which the AMF stores the correspondence between the TID, the SUPI, and the DNN in S710. However, in another implementation, the DNN may alternatively be replaced with the RSC. In other words, the AMF stores a correspondence between the TID, the SUPI, and the RSC in S710. In this implementation, the AMF determines the SUPI and the RSC based on the TID in S716, and then sends the SUPI, the RSC, and the remote UE report to the SMF in S717. The SMF includes the SUPI and the RSC in S718. The UDM determines the DNN based on the RSC, and then obtains, based on the DNN and the SUPI, SM subscription data that is of the remote UE and that corresponds to a DN. A subsequent solution is similar to the foregoing example. Details are not described again.

Corresponding to the methods provided in the foregoing method embodiments, embodiments of this application further provide corresponding apparatuses. The apparatuses include corresponding modules configured to perform the foregoing method embodiments. The module may be software, hardware, or a combination of software and hardware. It may be understood that technical features described in the foregoing method embodiments are also applicable to the following apparatus embodiments. Therefore, for content that is not described in detail, refer to the foregoing method embodiments. For brevity, details are not described herein again.

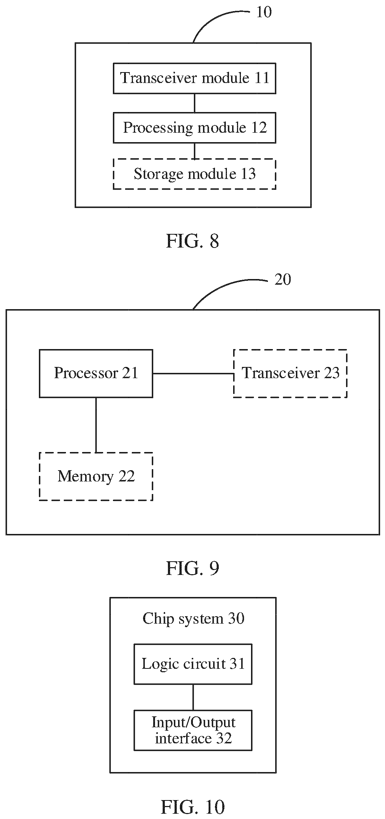

FIG. 8 is a schematic block diagram of a communication apparatus 10 according to an embodiment of this application. The apparatus 10 includes a transceiver module 11 and a processing module 12. The transceiver module 11 may implement a corresponding communication function. The processing module 12 is configured to perform data processing. In other words, the transceiver module 11 is configured to perform operations related to receiving and sending. The processing module 12 is configured to perform operations other than receiving and sending. The transceiver module 11 may also be referred to as a communication interface or a communication unit.

Optionally, the apparatus 10 may further include a storage module 13. The storage module 13 may be configured to store instructions and/or data. The processing module 12 may read the instructions and/or the data in the storage module, to enable the apparatus to implement an action of the device or the network element in the foregoing method embodiments.

In a first design, the apparatus 10 may correspond to the mobility management network element in the foregoing method embodiments (for example, the mobility management network element in the method 400 or the AMF in the method 500 to the method 700) or a component (for example, a chip) of the mobility management network element.

The apparatus 10 may implement corresponding steps or procedures performed by the mobility management network element in the foregoing method embodiments. The transceiver module 11 may be configured to perform operations related to receiving and sending of the mobility management network element in the foregoing method embodiments. The processing module 12 may be configured to perform a processing-related operation of the mobility management network element in the foregoing method embodiments.

In a possible implementation, the transceiver module 11 is configured to receive a transaction identifier of a remote terminal device and report information of the remote terminal device from a relay terminal device, where the report information includes a name of a data network corresponding to the remote terminal device; the processing module 12 is configured to determine a subscription permanent identifier of the remote terminal device based on the transaction identifier; and the transceiver module 11 is further configured to send the subscription permanent identifier and the report information to a session management network element.

In a second design, the apparatus 10 may correspond to the session management network element in the foregoing method embodiments (for example, the session management network element in the method 400 or the SMF in the method 500 to the method 700) or a component (for example, a chip) of the session management network element.

The apparatus 10 may implement corresponding steps or procedures performed by the session management network element in the foregoing method embodiments. The transceiver module 11 may be configured to perform operations related to receiving and sending of the terminal device in the foregoing method embodiments. The processing module 12 may be configured to perform a processing-related operation of the terminal device in the foregoing method embodiments.

In a possible implementation, the transceiver module 11 is configured to: receive report information of a remote terminal device and a subscription permanent identifier of the remote terminal device from a mobility management network element, where the report information includes a name of a data network corresponding to the remote terminal device; send a request message to a data management network element, where the request message includes the subscription permanent identifier and the name of the data network; and receive second information from the data management network element, where the second information is for determining whether to perform secondary authentication on the remote terminal device; and the processing module 12 is configured to determine, based on the second information, whether to perform secondary authentication on the remote terminal device.

In another possible implementation, the transceiver module 11 is configured to: receive report information of a remote terminal device from a mobility management network element, where the report information includes a subscription concealed identifier of the remote terminal device and a name of a data network corresponding to the remote terminal device; send a request message to a data management network element, where the request message includes the subscription concealed identifier and the name of the data network; and receive second information from the data management network element, where the second information is for determining whether to perform secondary authentication on the remote terminal device; and the processing module 12 is configured to determine, based on the second information, whether to perform secondary authentication on the remote terminal device.

In a third design, the apparatus 10 may correspond to the relay terminal device in the foregoing method embodiments (for example, the relay terminal device in the method 400 or the relay UE in the method 500 to the method 700) or a component (for example, a chip) of the relay terminal device.

The apparatus 10 may implement corresponding steps or procedures performed by the relay terminal device in the foregoing method embodiments. The transceiver module 11 may be configured to perform operations related to receiving and sending of the relay terminal device in the foregoing method embodiments. The processing module 12 may be configured to perform a processing-related operation of the terminal device in the foregoing method embodiments.

In a possible implementation, the processing module 12 is configured to generate report information of a remote terminal device, where the report information includes a name of a data network corresponding to the remote terminal device; and the transceiver module 11 is configured to send, to a mobility management network element, the report information and a transaction identifier corresponding to the remote terminal device.

In another possible implementation, the transceiver module 11 is configured to receive a subscription concealed identifier of a remote terminal device from the remote terminal device; the processing module 12 is configured to generate report information of the remote terminal device, where the report information includes the subscription concealed identifier and a name of a data network corresponding to the remote terminal device; and the transceiver module 11 is further configured to send the report information of the remote terminal device to a mobility management network element.

In a fourth design, the apparatus 10 may correspond to the remote terminal device in the foregoing method embodiments (for example, the remote terminal device in the method 400 or the remote LTE in the method 500 to the method 700) or a component (for example, a chip) of the remote terminal device.

The apparatus 10 may implement corresponding steps or procedures performed by the remote terminal device in the foregoing method embodiments. The transceiver module 11 may be configured to perform operations related to receiving and sending of the remote terminal device in the foregoing method embodiments. The processing module 12 may be configured to perform a processing-related operation of the remote terminal device in the foregoing method embodiments.

In a possible implementation, the transceiver module 11 is configured to receive a direct security mode command message from a relay terminal device; the processing module 12 is configured to generate a subscription concealed identifier of the remote terminal device; and the transceiver module 11 is further configured to send a direct security mode complete message to the relay terminal device, where the direct security mode complete message includes identification information of the remote terminal device.

It should be understood that a specific process in which the modules perform the foregoing corresponding steps has been described in detail in the foregoing method embodiments. For brevity, details are not described herein again.

It should be further understood that the apparatus 10 herein is presented in a form of a functional module. The term "module" herein may be an application-specific integrated circuit (application-specific integrated circuit, ASIC), an electronic circuit, a processor (for example, a shared processor, a dedicated processor, or a group processor) configured to execute one or more software or firmware programs, a memory, a combinational logic circuit, and/or another suitable component that supports the function. In an optional example, a person skilled in the art may understand that the apparatus 10 may be specifically the mobility management network element in the foregoing embodiments, and may be configured to perform the procedures and/or the steps corresponding to the mobility management network element in the foregoing method embodiments. Alternatively, the apparatus 10 may be specifically the terminal device in the foregoing embodiments, and may be configured to perform the procedures and/or the steps corresponding to the terminal device in the foregoing method embodiments. To avoid repetition, details are not described herein again.

The apparatus 10 in the foregoing solutions has a function of implementing the corresponding step performed by the device (for example, the mobility management network element, the session management network element, the relay terminal device, or the remote terminal device) in the foregoing methods. The function may be implemented by using hardware, or may be implemented by the hardware executing corresponding software. The hardware or software includes one or more modules corresponding to the foregoing functions. For example, the transceiver module may be replaced with a transceiver (for example, a sending unit in the transceiver module may be replaced with a transmitter, and a receiving unit in the transceiver module may be replaced with a receiver), and another unit such as the processing module may be replaced with a processor, to respectively perform receiving and sending operations and a related processing operation in the method embodiments.

In addition, the transceiver module 11 may be a transceiver circuit (for example, may include a receiver circuit and a transmitter circuit), and the processing module may be a processing circuit.

FIG. 9 is a diagram of another communication apparatus 20 according to an embodiment of this application. The apparatus 20 includes a processor 21. The processor 21 is configured to execute a computer program or instructions stored in a memory 22, or read data/signaling stored in the memory 22, to perform the methods in the foregoing method embodiments. Optionally, there are one or more processors 21.

Optionally, as shown in FIG. 9, the apparatus 20 further includes the memory 22, and the memory 22 is configured to store the computer program or the instructions and/or the data. The memory 22 may be integrated with the processor 21, or may be disposed separately. Optionally, there are one or more memories 22.

Optionally, as shown in FIG. 9, the apparatus 20 further includes a transceiver 23, and the transceiver 23 is configured to receive and/or send a signal. For example, the processor 21 is configured to control the transceiver 23 to receive and/or send the signal.

In a solution, the communication apparatus 20 is configured to implement operations performed by the mobility management network element in the foregoing method embodiments.

For example, the processor 21 is configured to execute the computer program or the instructions stored in the memory 22, to implement related operations of the mobility management network element in the foregoing method embodiments. For example, the processor 21 executes the computer program or the instructions stored in the memory 22, to implement the method performed by the mobility management network element in FIG. 4, or indicate the methods performed by the AMF in FIG. 5A to FIG. 7B.

In another solution, the communication apparatus 20 is configured to implement operations performed by the session management network element in the foregoing method embodiments.

For example, the processor 21 is configured to execute the computer program or the instructions stored in the memory 22, to implement related operations of the session management network element in the foregoing method embodiments. For example, the processor 21 executes the computer program or the instructions stored in the memory 22, to implement the method performed by the session management network element in FIG. 4, or indicate the methods performed by the SMF in FIG. 5A to FIG. 7B.

In another solution, the communication apparatus 20 is configured to implement operations performed by the relay terminal device in the foregoing method embodiments.

For example, the processor 21 is configured to execute the computer program or the instructions stored in the memory 22, to implement related operations of the relay terminal device in the foregoing method embodiments. For example, the processor 21 executes the computer program or the instructions stored in the memory 22, to implement the method performed by the relay terminal device in FIG. 4, or indicate the methods performed by the relay UE in FIG. 5A to FIG. 7B.

In another solution, the communication apparatus 20 is configured to implement operations performed by the remote terminal device in the foregoing method embodiments.

For example, the processor 21 is configured to execute the computer program or the instructions stored in the memory 22, to implement related operations of the remote terminal device in the foregoing method embodiments. For example, the processor 21 executes the computer program or the instructions stored in the memory 22, to implement the method performed by the remote terminal device in FIG. 4, or indicate the methods performed by the remote UE in FIG. 5A to FIG. 7B.

It should be understood that, the processor mentioned in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, a discrete hardware component, or the like. The general-purpose processor may be a microprocessor, or the processor may be any conventional processor or the like.

It should be further understood that the memory mentioned in embodiments of this application may be a volatile memory and/or a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM). For example, the RAM may be used as an external cache. By way of example but not limitation, the RAM includes the following plurality of forms: a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It should be noted that, when the processor is the general-purpose processor, the DSP, the ASIC, the FPGA or the another programmable logic device, the discrete gate or the transistor logic device, or the discrete hardware component, the memory (a storage module) may be integrated into the processor.

It should further be noted that the memory described in this specification is intended to include, but is not limited to, these and any other suitable type of memory.

FIG. 10 is a diagram of a chip system 30 according to an embodiment of this application. The chip system 30 (or may be referred to as a processing system) includes a logic circuit 31 and an input/output interface (input/output interface) 32.

The logic circuit 31 may be a processing circuit in the chip system 30. The logic circuit 31 may be coupled and connected to a storage unit, and invoke instructions in the storage unit, so that the chip system 30 can implement the methods and functions in embodiments of this application. The input/output interface 32 may be an input/output circuit in the chip system 30, and outputs information processed by the chip system 30, or inputs to-be-processed data or signaling information to the chip system 30 for processing.

In another solution, the chip system 30 is configured to implement operations performed by the mobility management network element (for example, the mobility management network element in FIG. 4 or the AMF in FIG. 5A to FIG. 7B) in the foregoing method embodiments.

For example, the logic circuit 31 is configured to implement processing-related operations performed by the mobility management network element in the foregoing method embodiments, for example, a processing-related operation performed by the mobility management network element in the embodiment shown in FIG. 4 or a processing-related operation performed by the AMF in the embodiment shown in any one of FIG. 5A to FIG. 7B. The input/output interface 32 is configured to implement operations related to sending and/or receiving and performed by the mobility management network element in the foregoing method embodiments, for example, an operation related to sending and/or receiving and performed by the mobility management network element in the embodiment shown in FIG. 4 or an operation related to sending and/or receiving performed by the AMF in the embodiment shown in any one of FIG. 5A to FIG. 7B.

In another solution, the chip system 30 is configured to implement operations performed by the session management network element (for example, the session management network element in FIG. 4 or the SMF in FIG. 5A to FIG. 7B) in the foregoing method embodiments.

For example, the logic circuit 31 is configured to implement processing-related operations performed by the mobility management network element in the foregoing method embodiments, for example, a processing-related operation performed by the session management network element in the embodiment shown in FIG. 4 or a processing-related operation performed by the SMF in the embodiment shown in any one of FIG. 5A to FIG. 7B. The input/output interface 32 is configured to implement operations related to sending and/or receiving and performed by the session management network element in the foregoing method embodiments, for example, an operation related to sending and/or receiving and performed by the session management network element in the embodiment shown in FIG. 4 or an operation related to sending and/or receiving performed by the SMF in the embodiment shown in any one of FIG. 5A to FIG. 7B.

In another solution, the chip system 30 is configured to implement operations performed by the relay terminal device (for example, the relay terminal device in FIG. 4 or the relay UE in FIG. 5A to FIG. 7B) in the foregoing method embodiments.

For example, the logic circuit 31 is configured to implement processing-related operations performed by the relay terminal device in the foregoing method embodiments, for example, a processing-related operation performed by the relay terminal device in the embodiment shown in FIG. 4 or a processing-related operation performed by the relay UE in the embodiment shown in any one of FIG. 5A to FIG. 7B. The input/output interface 32 is configured to implement operations related to sending and/or receiving and performed by the relay terminal device in the foregoing method embodiments, for example, an operation related to sending and/or receiving and performed by the relay terminal device in the embodiment shown in FIG. 4 or an operation related to sending and/or receiving performed by the relay UE in the embodiment shown in any one of FIG. 5A to FIG. 7B.

In another solution, the chip system 30 is configured to implement operations performed by the mobility management network element (for example, the remote terminal device in FIG. 4 or the remote UE in FIG. 5A to FIG. 7B) in the foregoing method embodiments.

For example, the logic circuit 31 is configured to implement processing-related operations performed by the remote terminal device in the foregoing method embodiments, for example, a processing-related operation performed by the remote terminal device in the embodiment shown in FIG. 4 or a processing-related operation performed by the remote UE in the embodiment shown in any one of FIG. 5A to FIG. 7B. The input/output interface 32 is configured to implement operations related to sending and/or receiving and performed by the remote terminal device in the foregoing method embodiments, for example, an operation related to sending and/or receiving and performed by the remote terminal device in the embodiment shown in FIG. 4 or an operation related to sending and/or receiving performed by the remote UE in the embodiment shown in any one of FIG. SAto FIG. 7B.

An embodiment of this application further provides a computer-readable storage medium. The computer-readable storage medium stores computer instructions for implementing the methods performed by a device in the foregoing method embodiments.

For example, when a computer program is executed by a computer, the computer is enabled to implement the methods performed by the mobility management network element in the foregoing method embodiments.

For another example, when a computer program is executed by a computer, the computer is enabled to implement the methods performed by the terminal device in the foregoing method embodiments.

An embodiment of this application further provides a computer program product, including instructions. When the instructions are executed by a computer, the methods performed by a device (for example, the mobility management network element or the terminal device) in the foregoing method embodiments are implemented.

An embodiment of this application further provides a communication system, including the foregoing mobility management network element and session management network element. Optionally, the system further includes a device that communicates with the foregoing remote terminal device and/or relay terminal device.

For explanations and beneficial effects of related content of any one of the apparatuses provided above, refer to the corresponding method embodiment provided above. Details are not described herein again.

In the several embodiments provided in this application, it should be understood that the disclosed apparatuses and methods may be implemented in other manners. For example, the foregoing apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or other forms.

All or some of the foregoing embodiments may be implemented by using software, hardware, firmware, or any combination thereof. When software is used to implement embodiments, all or a part of embodiments may be implemented in a form of a computer program product. The computer program product includes one or more computer instructions. When the computer program instructions are loaded and executed on the computer, the procedure or functions according to embodiments of this application are all or partially generated. The computer may be a general-purpose computer, a dedicated computer, a computer network, or other programmable apparatuses. For example, the computer may be a personal computer, a server, a network device, or the like. The computer instructions may be stored in a computer-readable storage medium or may be transmitted from one computer-readable storage medium to another computer-readable storage medium. For example, the computer instructions may be transmitted from one website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid-state drive, SSD)), or the like. For example, the usable medium may include but is not limited to any medium that can store program code, for example, a USB flash drive, a removable hard disk, a read-only memory (read-only memory, ROM), a random access memory (random access memory, RAM), a magnetic disk, or an optical disc.

The foregoing descriptions are merely specific implementations of this application, but the protection scope of this application is not limited thereto. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, comprising:
receiving, by a mobility management network element, a transaction identifier of a remote terminal device and report information of the remote terminal device from a relay terminal device, wherein the report information comprises a name of a data network corresponding to the remote terminal device;
determining, by the mobility management network element, a subscription permanent identifier of the remote terminal device based on the transaction identifier; and
sending, by the mobility management network element, the subscription permanent identifier and the report information to a session management network element.

2. The method according to claim 1, wherein the method further comprises:
receiving, by the mobility management network element, the subscription permanent identifier of the remote terminal device from an authentication server function network element; and
storing, by the mobility management network element, a correspondence between the subscription permanent identifier and the transaction identifier; and
the determining, by the mobility management network element, a subscription permanent identifier of the remote terminal device based on the transaction identifier comprises:
determining, by the mobility management network element, the subscription permanent identifier based on the transaction identifier and the correspondence.

3. The method according to claim 1 or 2, wherein after the sending, by the mobility management network element, the subscription permanent identifier and the report information to a session management network element, the method further comprises:
receiving, by the mobility management network element, an authentication command message from the session management network element, wherein the authentication command message comprises identification information of the remote terminal device, and the authentication command message is for requesting to perform secondary authentication on the remote terminal device; and
sending, by the mobility management network element, the authentication command message to the relay terminal device.

4. A communication method, comprising:
receiving, by a session management network element, report information of a remote terminal device and a subscription permanent identifier of the remote terminal device from a mobility management network element, wherein the report information comprises a name of a data network corresponding to the remote terminal device;
sending, by the session management network element, a request message to a data management network element, wherein the request message comprises the subscription permanent identifier and the name of the data network;
receiving, by the session management network element, information from the data management network element, wherein the information is for determining whether to perform secondary authentication on the remote terminal device; and
determining, by the session management network element based on the information, whether to perform secondary authentication on the remote terminal device.

5. The method according to claim 4, wherein the information comprises at least one of the following information: subscription data that is of the remote terminal device and that corresponds to the data network and is related to session management, first indication information, and second indication information, wherein the first indication information indicates whether secondary authentication needs to be performed on the remote terminal device, and the second indication information indicates whether a previous time of secondary authentication on the remote terminal device succeeds.

6. A communication method, comprising:
generating, by a relay terminal device, report information of a remote terminal device, wherein the report information comprises a name of a data network corresponding to the remote terminal device; and
sending, by the relay terminal device to a mobility management network element, the report information and a transaction identifier corresponding to the remote terminal device.

7. The method according to claim 6, wherein the method further comprises:
determining, by the relay terminal device, the name of the data network based on a relay service code corresponding to the remote terminal device.

8. The method according to claim 6 or 7, wherein after the sending, by the relay terminal device to a mobility management network element, a transaction identifier corresponding to the remote terminal device, the method further comprises:
receiving, by the relay terminal device, an authentication command message from the mobility management network element, wherein the authentication command message comprises identification information of the remote terminal device, and the authentication command message is for requesting to perform secondary authentication on the remote terminal device;
obtaining, by the relay terminal device, identity information of the remote terminal device based on the authentication command message; and
sending, by the relay terminal device, the identity information to the mobility management network element.

9. A communication method, comprising:
receiving, by a session management network element, report information of a remote terminal device from a mobility management network element, wherein the report information comprises a subscription concealed identifier of the remote terminal device and a name of a data network corresponding to the remote terminal device;
sending, by the session management network element, a request message to a data management network element, wherein the request message comprises the subscription concealed identifier and the name of the data network;
receiving, by the session management network element, information from the data management network element, wherein the information is for determining whether to perform secondary authentication on the remote terminal device; and
determining, by the session management network element based on the information, whether to perform secondary authentication on the remote terminal device.

10. The method according to claim 9, wherein the information comprises at least one of the following information: subscription data that is of the remote terminal device and that corresponds to the data network and is related to session management, first indication information, and second indication information, wherein the first indication information indicates whether secondary authentication needs to be performed on the remote terminal device, and the second indication information indicates whether a previous time of secondary authentication on the remote terminal device succeeds.

11. A communication method, comprising:
receiving, by a relay terminal device, a subscription concealed identifier of a remote terminal device from the remote terminal device;
generating, by the relay terminal device, report information of the remote terminal device, wherein the report information comprises the subscription concealed identifier and a name of a data network corresponding to the remote terminal device; and
sending, by the relay terminal device, the report information of the remote terminal device to a mobility management network element.

12. The method according to claim 11, wherein the method further comprises:
determining, by the relay terminal device, the name of the data network based on a transaction identifier of the remote terminal device.

13. The method according to claim 11 or 12, wherein after the sending, by the relay terminal device, the report information of the remote terminal device to a mobility management network element, the method further comprises:
receiving, by the relay terminal device, an authentication command message from the mobility management network element, wherein the authentication command message comprises identification information of the remote terminal device, and the authentication command message is for requesting to perform secondary authentication on the remote terminal device;
obtaining, by the relay terminal device, identity information of the remote terminal device based on the authentication command message; and
sending, by the relay terminal device, the identity information to the mobility management network element.

14. A communication method, comprising:
receiving, by a mobility management network element, a transaction identifier of a remote terminal device and report information of the remote terminal device from a relay terminal device, wherein the report information comprises a name of a data network corresponding to the remote terminal device;
determining, by the mobility management network element, a subscription permanent identifier of the remote terminal device based on the transaction identifier;
sending, by the mobility management network element, the subscription permanent identifier and the report information to a session management network element;
receiving, by the session management network element, the report information of the remote terminal device and the subscription permanent identifier of the remote terminal device from the mobility management network element;
sending, by the session management network element, a request message to a data management network element, wherein the request message comprises the subscription permanent identifier and the name of the data network;
receiving, by the data management network element, the request message from the session management network element;
sending, by the data management network element, information to the session management network element, wherein the information is for determining whether to perform secondary authentication on the remote terminal device;
receiving, by the session management network element, the information from the data management network element, wherein the information is for determining whether to perform secondary authentication on the remote terminal device; and
determining, by the session management network element based on the information, whether to perform secondary authentication on the remote terminal device.

15. The method according to claim 14, wherein the method further comprises:
sending, by an authentication server function network element, the subscription permanent identifier of the remote terminal device to the mobility management network element;
receiving, by the mobility management network element, the subscription permanent identifier of the remote terminal device from the authentication server function network element; and
storing, by the mobility management network element, a correspondence between the subscription permanent identifier and the transaction identifier; and
the determining, by the mobility management network element, a subscription permanent identifier of the remote terminal device based on the transaction identifier comprises:
determining, by the mobility management network element, the subscription permanent identifier based on the transaction identifier and the correspondence.

16. The method according to claim 14 or 15, wherein after the sending, by the mobility management network element, the subscription permanent identifier and the report information to a session management network element, the method further comprises:
sending, by the session management network element, an authentication command message to the mobility management network element, wherein the authentication command message comprises identification information of the remote terminal device, and the authentication command message is for requesting to perform secondary authentication on the remote terminal device;
receiving, by the mobility management network element, the authentication command message from the session management network element;
sending, by the mobility management network element, the authentication command message to the relay terminal device;
receiving, by the relay terminal device, the authentication command message from the mobility management network element;
obtaining, by the relay terminal device, identity information of the remote terminal device based on the authentication command message;
sending, by the relay terminal device, the identity information to the mobility management network element; and
receiving, by the mobility management network element, the identity information from the relay terminal device.

17. The method according to any one of claims 14 to 16, wherein the information comprises at least one of the following information: subscription data that is of the remote terminal device and that corresponds to the data network and is related to session management, first indication information, and second indication information, wherein the first indication information indicates whether secondary authentication needs to be performed on the remote terminal device, and the second indication information indicates whether a previous time of secondary authentication on the remote terminal device succeeds.

18. The method according to any one of claims 14 to 17, wherein the method further comprises:
generating, by the relay terminal device, the report information of the remote terminal device; and
sending, by the relay terminal device to the mobility management network element, the report information and the transaction identifier corresponding to the remote terminal device.

19. The method according to any one of claims 14 to 18, wherein the method further comprises:
determining, by the relay terminal device, the name of the data network based on a relay service code corresponding to the remote terminal device.

20. A communication method, comprising:
receiving, by a mobility management network element, report information of a remote terminal device from a relay terminal device, wherein the report information comprises a subscription concealed identifier of the remote terminal device and a name of a data network corresponding to the remote terminal device;
sending, by the mobility management network element, the report information of the remote terminal device to a session management network element;
receiving, by the session management network element, the report information of the remote terminal device from the mobility management network element;
sending, by the session management network element, a request message to a data management network element, wherein the request message comprises the subscription concealed identifier and the name of the data network;
receiving, by the data management network element, the request message from the session management network element;
sending, by the data management network element, information to the session management network element, wherein the information is for determining whether to perform secondary authentication on the remote terminal device;
receiving, by the session management network element, the information from the data management network element, wherein the information is for determining whether to perform secondary authentication on the remote terminal device; and
determining, by the session management network element based on the information, whether to perform secondary authentication on the remote terminal device.

21. The method according to claim 20, wherein the information comprises at least one of the following information: subscription data that is of the remote terminal device and that corresponds to the data network and is related to session management, first indication information, and second indication information, wherein the first indication information indicates whether secondary authentication needs to be performed on the remote terminal device, and the second indication information indicates whether a previous time of secondary authentication on the remote terminal device succeeds.

22. The method according to claim 20 or 21, wherein the method further comprises:
sending, by the mobility management network element, an authentication command message to the relay terminal device, wherein the authentication command message comprises identification information of the remote terminal device, and the authentication command message is for requesting to perform secondary authentication on the remote terminal device;
receiving, by the relay terminal device, the authentication command message from the mobility management network element;
obtaining, by the relay terminal device, identity information of the remote terminal device based on the authentication command message;
sending, by the relay terminal device, the identity information to the mobility management network element; and
receiving, by the mobility management network element, the identity information from the relay terminal device.

23. The method according to any one of claims 20 to 22, wherein the method further comprises:
determining, by the relay terminal device, the name of the data network based on a transaction identifier of the remote terminal device.

24. The method according to any one of claims 20 to 23, wherein the method further comprises:
receiving, by the relay terminal device, the subscription concealed identifier of the remote terminal device from the remote terminal device;
generating, by the relay terminal device, the report information of the remote terminal device; and
sending, by the relay terminal device, the report information of the remote terminal device to the mobility management network element.

25. A communication apparatus, comprising: a transceiver module and a processing module, wherein
the transceiver module is configured to receive a transaction identifier of a remote terminal device and report information of the remote terminal device from a relay terminal device, wherein the report information comprises a name of a data network corresponding to the remote terminal device;
the processing module is configured to determine a subscription permanent identifier of the remote terminal device based on the transaction identifier; and
the transceiver module is further configured to send the subscription permanent identifier and the report information to a session management network element.

26. The apparatus according to claim 25, wherein
the transceiver module is further configured to receive the subscription permanent identifier of the remote terminal device from an authentication server function network element;
the processing module is further configured to store a correspondence between the subscription permanent identifier and the transaction identifier; and
the processing module is further configured to determine the subscription permanent identifier based on the transaction identifier and the correspondence.

27. The apparatus according to claim 25 or 26, wherein
the transceiver module is further configured to receive an authentication command message from the session management network element, wherein the authentication command message comprises identification information of the remote terminal device, and the authentication command message is for requesting to perform secondary authentication on the remote terminal device; and
the transceiver module is further configured to send the authentication command message to the relay terminal device.

28. A communication apparatus, comprising: a transceiver module and a processing module, wherein
the transceiver module is configured to receive report information of a remote terminal device and a subscription permanent identifier of the remote terminal device from a mobility management network element, wherein the report information comprises a name of a data network corresponding to the remote terminal device;
the transceiver module is further configured to send a request message to a data management network element, wherein the request message comprises the subscription permanent identifier and the name of the data network;
the transceiver module is further configured to receive information from the data management network element, wherein the information is for determining whether to perform secondary authentication on the remote terminal device; and
the processing module is configured to determine, based on the information, whether to perform secondary authentication on the remote terminal device.

29. The apparatus according to claim 28, wherein the information comprises at least one of the following information: subscription data that is of the remote terminal device and that corresponds to the data network and is related to session management, first indication information, and second indication information, wherein the first indication information indicates whether secondary authentication needs to be performed on the remote terminal device, and the second indication information indicates whether a previous time of secondary authentication on the remote terminal device succeeds.

30. A communication apparatus, comprising: a transceiver module and a processing module, wherein
the processing module is configured to generate report information of a remote terminal device, wherein the report information comprises a name of a data network corresponding to the remote terminal device; and
the transceiver module is configured to send, to a mobility management network element, the report information and a transaction identifier corresponding to the remote terminal device.

31. The apparatus according to claim 30, wherein
the processing module is further configured to determine the name of the data network based on a relay service code corresponding to the remote terminal device.

32. The apparatus according to claim 30 or 31, wherein
the transceiver module is further configured to receive an authentication command message from the mobility management network element, wherein the authentication command message comprises identification information of the remote terminal device, and the authentication command message is for requesting to perform secondary authentication on the remote terminal device;
the processing module is further configured to obtain identity information of the remote terminal device based on the authentication command message; and
the transceiver module is further configured to send the identity information to the mobility management network element.

33. A communication apparatus, comprising: a transceiver module and a processing module, wherein
the transceiver module is configured to receive report information of a remote terminal device from a mobility management network element, wherein the report information comprises a subscription concealed identifier of the remote terminal device and a name of a data network corresponding to the remote terminal device;
the transceiver module is further configured to send a request message to a data management network element, wherein the request message comprises the subscription concealed identifier and the name of the data network;
the transceiver module is further configured to receive information from the data management network element, wherein the information is for determining whether to perform secondary authentication on the remote terminal device; and
the processing module is configured to determine, based on the information, whether to perform secondary authentication on the remote terminal device.

34. The apparatus according to claim 33, wherein the information comprises at least one of the following information: subscription data that is of the remote terminal device and that corresponds to the data network and is related to session management, first indication information, and second indication information, wherein the first indication information indicates whether secondary authentication needs to be performed on the remote terminal device, and the second indication information indicates whether a previous time of secondary authentication on the remote terminal device succeeds.

35. A communication apparatus, comprising: a transceiver module and a processing module, wherein
the transceiver module is configured to receive a subscription concealed identifier of a remote terminal device from the remote terminal device;
the processing module is configured to generate report information of the remote terminal device, wherein the report information comprises the subscription concealed identifier and a name of a data network corresponding to the remote terminal device; and
the transceiver module is further configured to send the report information of the remote terminal device to a mobility management network element.

36. The apparatus according to claim 35, wherein
the processing module is further configured to determine the name of the data network based on a transaction identifier of the remote terminal device.

37. The apparatus according to claim 35 or 36, wherein
the transceiver module is further configured to receive an authentication command message from the mobility management network element, wherein the authentication command message comprises identification information of the remote terminal device, and the authentication command message is for requesting to perform secondary authentication on the remote terminal device;
the processing module is further configured to obtain identity information of the remote terminal device based on the authentication command message; and
the transceiver module is further configured to send the identity information to the mobility management network element.

38. A communication apparatus, wherein the apparatus comprises one or more functional modules, and the one or more functional modules are configured to perform the method according to any one of claims 1 to 3, the method according to claim 4 or 5, the method according to any one of claims 6 to 8, the method according to claim 9 or 10, or the method according to any one of claims 11 to 13.

39. A communication apparatus, comprising:
a processor, configured to execute a computer program stored in a memory, to enable the apparatus to perform the method according to any one of claims 1 to 3, the method according to claim 4 or 5, the method according to any one of claims 6 to 8, the method according to claim 9 or 10, or the method according to any one of claims 11 to 13.

40. A communication system, wherein the communication system comprises the communication apparatus according to any one of claims 25 to 27 and the communication apparatus according to claim 28, 29, 33, or 34.

41. A computer program product, wherein the computer program product comprises instructions for performing the method according to any one of claims 1 to 3, instructions for performing the method according to claim 4 or 5, instructions for performing the method according to any one of claims 6 to 8, instructions for performing the method according to claim 9 or 10, or instructions for performing the method according to any one of claims 11 to 13.

42. A computer-readable storage medium, wherein the computer-readable storage medium stores a computer program; and when the computer program is run on a computer, the computer is enabled to perform the method according to any one of claims 1 to 3, the method according to claim 4 or 5, the method according to any one of claims 6 to 8, the method according to claim 9 or 10, or the method according to any one of claims 11 to 13.
